# EUROPEAN PATENT SPECIFICATION

(11) **EP 4 020 705 B1**
(45) Date of publication and mention of the grant of the patent: **21.05.2025**
(21) Application number: 20854537.6
(22) Date of filing: 12.08.2020
(51) Int. Cl.: H01Q 1/24, H01Q 5/328, H01Q 9/42, H01Q 21/28, H04M 1/02

(54) **ANTENNA ASSEMBLY AND ELECTRONIC DEVICE HAVING ROLLABLE SCREEN**
ANTENNENANORDNUNG UND ELEKTRONISCHE VORRICHTUNG MIT ROLLBAREM BILDSCHIRM
ENSEMBLE ANTENNE ET DISPOSITIF ÉLECTRONIQUE COMPORTANT UN ÉCRAN DE PRISE

(30) Priority: 22.08.2019 CN 201910780584
(43) Date of publication of application: 29.06.2022
(73) Proprietor: Huawei Technologies Co., Ltd., Longgang District Shenzhen, Guangdong 518129 (CN)
(72) Inventor: MA, Guozhong, Shenzhen, Guangdong 518129 (CN); LI, Jinlei, Shenzhen, Guangdong 518129 (CN); CHEN, Hao, Shenzhen, Guangdong 518129 (CN); ZHONG, Ding, Shenzhen, Guangdong 518129 (CN)
(74) Representative: Gill Jennings & Every LLP
(86) International application number: PCT/CN2020/108603
(87) International publication number: WO 2021/031944

(56) References cited:
- WO-A1-2019/068331
- WO-A1-2019/100202
- CN-A- 105 006 647
- CN-A- 105 958 201
- CN-A- 109 818 138
- CN-U- 204 538 197
- CN-U- 204 538 197
- CN-U- 206 712 016
- CN-U- 209 072 551
- US-A1- 2017 054 200
- US-A1- 2018 026 338
- US-A1- 2018 241 115
- US-A1- 2019 067 796

## Description

### TECHNICAL FIELD

This application relates to the field of terminal technologies, and in particular, to an antenna assembly and an electronic device with a rollable display.

### BACKGROUND

A mobile communications network provided by an operator is needed for communication between intelligent terminals such as mobile phones. A communication connection between intelligent devices can further be implemented in a plurality of manners such as wireless fidelity (Wireless Fidelity, Wi-Fi), Bluetooth, and infrared. For a mobile phone, communication signals are sent and received through antennas. Because the mobile phone performs communication in various manners, a relatively large quantity of antennas need to be disposed inside the mobile phone.

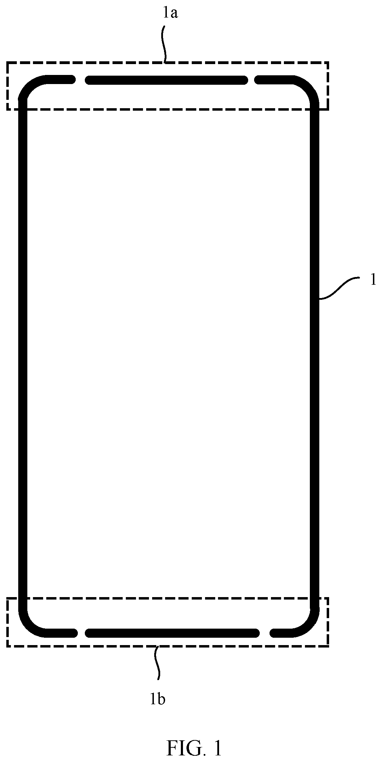

Currently, when the antennas are disposed in the mobile phone, as shown in FIG. 1, specifically, gaps are disposed at a top part and a bottom part of a metal frame 1 of the mobile phone, to form a first antenna 1a and a second antenna 1b. The first antenna 1a includes a top metal frame and parts of metal side frames, and the second antenna 1b includes a bottom metal frame and parts of the metal side frames.

When side frames of a mobile phone are non-metal frames, for example, when the side frames of the mobile phone are glass frames, a total length of metal frames that can be used as antennas is reduced. Consequently, there is no sufficient length space in the mobile phone for arranging all antennas.
US 2019/067796 A1 describes a mobile device that includes a ground element, a first radiation element, a second radiation element, a matching circuit, and a first metal frame.
WO 2019/068331 A1 describes an antenna system for a mobile device that includes a first electrically conductive member having a plurality of segments including at least a first corner segment and a central segment that is disposed adjacent to the first corner segment.
US 2018/026338 A1 describes an antenna structure that includes a metal housing, a first resonance portion, a second resonance portion, an extending portion, and a signal feed source.
WO 2019/100202 A1 describes an antenna comprising an antenna body and an antenna branch, wherein one end of the antenna branch is connected to the antenna body, and the other end thereof is connected to a feed point of a main radio frequency path; the end of the antenna branch which is connected to the feed point of the main radio frequency path is also connected to the antenna body by means of a first adjustable device; and the first adjustable device comprises an off state and an on state.
CN 204 538 197 U describes a portable wireless telecom equipment's metal frame antenna.
US 2018/241115 A1 describes an electronic device including a support member on which an antenna radiator is formed.

### SUMMARY

This application provides an antenna assembly and an electronic device with a rollable display, to increase a length of an antenna, ensure radiation efficiency of the antenna, and resolve a problem in an existing mobile phone that a length for arranging antennas in the mobile phone is insufficient due to reduction of metal frames that can be used as antennas.
In accordance with the invention, there is provided an electronic device as device in the appended claims.

A first aspect provides an antenna assembly, used in an electronic device. The antenna assembly includes a first antenna, and the first antenna includes a first radiator, a first extension stub, and a first feed point and a first ground point that are electrically connected to the first extension stub. One end of the first extension stub is connected to the first radiator, the other end of the first extension stub extends into the electronic device, and the first radiator is a part of a top metal frame or a part of a bottom metal frame of the electronic device.

The first antenna includes the first radiator and the first extension stub connected to the first radiator, and the first radiator is located on the top metal frame or the bottom metal frame of the electronic device. In this way, the first radiator can radiate an electromagnetic wave to the outside, so that radiation efficiency of the first antenna is ensured. The first extension stub extends into the electronic device. In this way, when a side edge of the electronic device is a non-metal frame, disposition of the first extension stub increases a length of the first antenna. This ensures that the first antenna has a sufficient length, and ensures that an antenna with a sufficient length can be disposed in the electronic device. Therefore, a problem in an existing mobile phone that a length for arranging antennas in the mobile phone is insufficient due to reduction of metal frames that can be used as antennas is resolved.

In a possible implementation, the antenna assembly further includes a second antenna. The second antenna includes at least a second radiator, a second extension stub, and a second feed point and a second ground point that are electrically connected to the second extension stub, one end of the second extension stub is connected to the second radiator, and the other end of the second extension stub extends into the electronic device.

The first radiator is located at one end of the top metal frame, and the second radiator is located at the other end of the top metal frame.

Alternatively, the first radiator is located at one end of the bottom metal frame, and the second radiator is located at the other end of the bottom metal frame. Alternatively, the first radiator is located at one end of the top metal frame, and the second radiator is located at one end of the bottom metal frame; or the first radiator is located at one end of the bottom metal frame, and the second radiator is located at one end of the top metal frame.

The second extension stub is disposed, so that the second extension stub increases a length of the second antenna. This ensures that the second antenna has a sufficient length.

In a possible implementation, the antenna assembly further includes a third antenna. The third antenna includes at least a third radiator and a third feed point and a third ground point that are electrically connected to the third radiator.

The third radiator is located between the first radiator and the second radiator, a first gap exists between one end of the third radiator and the first radiator, a second gap exists between the other end of the third radiator and the second radiator.

In this way, the third antenna may use a radiation stub of the first antenna or the second antenna, and the first antenna and the second antenna may use the radiator of the third antenna for radiation, to ensure that the third antenna, the first antenna, and the second antenna excite corresponding resonance frequencies when lengths of the third antenna, the first antenna, and the second antenna are relatively small.

In a possible implementation, the antenna assembly further includes a fourth antenna. The fourth antenna includes at least a fourth radiator, a fourth extension stub, and a fourth feed point and a fourth ground point that are electrically connected to the fourth extension stub.

One end of the fourth extension stub is connected to the fourth radiator, the other end of the fourth extension stub extends into the electronic device, one of the fourth radiator and the first radiator is a part of the top metal frame, and the other is a part of the bottom metal frame.

A length of the fourth antenna is increased by using the fourth extension stub, to ensure that more antennas can be disposed in the electronic device.

In a possible implementation, the antenna assembly further includes a fifth antenna. The fifth antenna includes at least a fifth radiator, a fifth extension stub, and a fifth feed point and a fifth ground point that are electrically connected to the fifth extension stub, one end of the fifth extension stub is connected to the fifth radiator, and the other end of the fifth extension stub extends into the electronic device.

The fourth radiator is located at one end of the top metal frame, and the fifth radiator is located at the other end of the top metal frame; or the fourth radiator is located at one end of the bottom metal frame, and the fifth radiator is located at the other end of the bottom metal frame. Alternatively, one of the fourth radiator, the fifth radiator, the first radiator, and the second radiator is located at one end of the top metal frame, another one is located at the other end of the top metal frame, the 3rd one is located at one end of the bottom metal frame, and the 4th one is located at the other end of the bottom metal frame.

A length of the fifth antenna is increased by using the fifth extension stub, to ensure that an enough long antenna can be disposed in the electronic device.

In a possible implementation, the antenna assembly further includes a sixth antenna. The sixth antenna includes at least a sixth radiator and a sixth feed point and a sixth ground point that are electrically connected to the sixth radiator.

The sixth radiator is located between the fourth radiator and the fifth radiator, there is a gap between one end of the sixth radiator and the fourth radiator, and a third gap exists between one end of the sixth radiator and the fourth radiator, a fourth gap exists between the other end of the sixth radiator and the fifth radiator. The sixth antenna is disposed, and the radiator of the sixth antenna is located between the fifth antenna and the fourth antenna. In this way, the sixth antenna may use a radiation stub of the fourth antenna or the fifth antenna, and the fourth antenna and the fifth antenna may use the radiator of the sixth antenna for radiation, to ensure that the sixth antenna, the fifth antenna, and the fourth antenna excite corresponding resonance frequencies when lengths of the sixth antenna, the fifth antenna, and the fourth antenna are relatively small.

In a possible implementation, the third antenna further includes a first tuning circuit, one end of the first tuning circuit is electrically connected to the third radiator through a first tuning contact, and the other end of the first tuning circuit is grounded.

The sixth antenna further includes a second tuning circuit, one end of the second tuning circuit is electrically connected to the sixth radiator through a second tuning contact, and the other end of the second tuning circuit is grounded.

The first tuning circuit can enable the third antenna to cover an entire bandwidth of a low band when the third antenna is used as a low-band antenna, and the second tuning circuit can enable the sixth antenna to cover an entire bandwidth of a low band when the sixth antenna is used as a low-band antenna.

In a possible implementation, the first tuning circuit and the second tuning circuit each include a tuning switch and at least one matching circuit, one end of the matching circuit is electrically connected to the tuning switch, and the other end of the matching circuit is grounded. The third antenna and the sixth antenna can be switched to matching paths with different load by using tuning switches, so that the third antenna and the sixth antenna cover more bandwidths.

In a possible implementation, the first radiator, the second radiator, and the third radiator are three metal frames formed by disposing two gaps on the top metal frame.

The fourth radiator, the fifth radiator, and the sixth radiator are three metal frames formed by disposing two gaps on the bottom metal frame.

In this way, the top metal frame may be used as the first radiator, the second radiator, and the third radiator to transmit an electromagnetic wave to the outside, and the bottom metal frame may be used as the fourth radiator, the fifth radiator, and the sixth radiator. This avoids additionally disposing an antenna radiator in the electronic device. In addition, when the top metal frame and the bottom metal frame are used as antenna radiators, because the top metal frame and the bottom metal frame are located at the top and the bottom of the electronic device, radiation efficiency is relatively high.

In a possible implementation, the first extension stub, the second extension stub, the fourth extension stub, and the fifth extension stub each are in a suspended bridge structure in the electronic device.

This ensures that the first extension stub, the second extension stub, the fourth extension stub, and the fifth extension stub have appropriate clearances in the electronic device.

In a possible implementation, the first extension stub, the second extension stub, the fourth extension stub, and the fifth extension stub are four metal stubs formed by ea metal middle plate in the electronic device separately extending toward the top metal frame and the bottom metal frame.

In this way, the metal middle plate is integrated with the first extension stub, the second extension stub, the fourth extension stub, and the fifth extension stub, and one end of each of the first extension stub, the second extension stub, the fourth extension stub, and the fifth extension stub is grounded by using the metal middle plate. This avoids a case in which a spring plate is disposed between the extension stub and the metal middle plate for grounding.

In a possible implementation, lengths of the first extension stub, the second extension stub, the fourth extension stub, and the fifth extension stub are in a range of 10 mm to 25 mm.

In a possible implementation, lengths of the first radiator, the second radiator, the fourth radiator, and the fifth radiator are in a range of 8 mm to 10 mm. This ensures that the first antenna, the second antenna, the fourth antenna, and the fifth antenna can be used as medium- and high-band antennas.

In a possible implementation, lengths of the third radiator and the sixth radiator are in a range of 50 mm to 60 mm. This can ensure that the third radiator and the sixth radiator can be used as low-band antennas.

In a possible implementation, clearances of the first radiator, the second radiator, and the third radiator are in a range of 1 mm to 1.4 mm.

Clearances of the fourth radiator, the fifth radiator, and the sixth radiator are in a range of 1.2 mm to 1.4 mm.

Clearances of the first extension stub, the second extension stub, the fourth extension stub, and the fifth extension stub are not less than 0.5 mm. This ensures that each radiator and each extension stub have specific clearance regions during working, so that radiation efficiency of each radiator and each extension stub is higher.

In a possible implementation, a gap width of the first gap and the second gap are in a range of 1 mm to 1.5 mm. This ensures that capacitive loading is formed at the gap between one end of the third radiator and one end of the first radiator and the gap between the other end of the third radiator and one end of the second radiator, so that the third antenna can use the radiation stub of the first antenna or the second antenna, and the first antenna and the second antenna can use the radiation stub of the third antenna.

A gap width of the third gap and the fourth gap are in a range of 1 mm to 1.5 mm. This ensures that capacitive loading is formed at the gap between one end of the sixth radiator and one end of the fourth radiator and the gap between the other end of the sixth radiator and one end of the fifth radiator, so that the sixth antenna can use the radiation stub of the fourth antenna or the fifth antenna, and the fourth antenna and the fifth antenna can use the radiation stub of the sixth antenna.

In a possible implementation, the antenna assembly further includes at least one high-band antenna located in the electronic device, and each high-band antenna includes a high-band radiator and a feed point and a ground point that are electrically connected to the high-band radiator.

The at least one high-band antenna is disposed, so that a high band covered by the antenna is extended, and a high-band communication requirement is met.

In a possible implementation, the high-band antenna is located on an inner side of a radiation stub of the first antenna, a radiation stub of the second antenna, a radiation stub of the fourth antenna, or a radiation stub of the fifth antenna.

A clearance of the high-band antenna is greater than or equal to 0.5 mm. This ensures that radiation efficiency of the high-band antenna is relatively high.

In a possible implementation, the third antenna is a low-band antenna, the first antenna and the second antenna are medium- and high-band antennas, the first antenna and the second antenna use the radiator of the third antenna, and the third antenna uses the radiation stub of the first antenna or the second antenna. In this way, the third antenna and one of the first antenna and the second antenna may be used as main antennas, and the other of the first antenna and the second antenna may be used as a medium- and high-band MIMO antenna or a Wi-Fi antenna.

The sixth antenna is a low-band antenna, the fourth antenna and the fifth antenna are medium- and high-band antennas, the fifth antenna and the fourth antenna use the radiator of the sixth antenna, and the sixth antenna uses the radiation stub of the fourth antenna or the fifth antenna. In this way, the sixth antenna and one of the fourth antenna and the fifth antenna may be used as diversity antennas, and the other of the fifth antenna and the fourth antenna may be used as a medium- and high-band MIMO antenna, a Wi-Fi antenna, or a GPS antenna.

A second aspect provides an electronic device as defined in claim 1.

The antenna assembly of the first aspect is included, and at least one of the top frame and the bottom frame of the middle frame is a metal frame. In this way, the metal frame may be used as a radiator of an antenna in the antenna assembly, and an extension stub in the antenna assembly can increase a length of the antenna, so that when a side frame of the electronic device is a non-metal frame, it is ensured that the antenna has a sufficient length. This avoids a problem that a length for arranging antennas is insufficient because a metal frame is shortened, and resolves a problem in an existing mobile phone that a length for arranging antennas in the mobile phone is insufficient due to reduction of metal frames that can be used as antennas.

In a possible implementation, the middle frame includes a metal middle plate and a top metal frame and a bottom metal frame that are located at two ends of the metal middle plate, the metal middle plate is located in space enclosed by the rollable display and the rear cover, and the top metal frame and the bottom metal frame are respectively located at the top and the bottom of the rollable display and the rear cover.

In a possible implementation, there are at least two gaps on each of the top metal frame and the bottom metal frame, and the at least two gaps divide the top metal frame into a first radiator, a second radiator, and a third radiator located between the first radiator and the second radiator that are of the antenna assembly.

The at least two gaps divide the bottom metal frame into at least a fourth radiator, a fifth radiator, and a sixth radiator located between the fourth radiator and the fifth radiator that are of the antenna assembly.

In a possible implementation, there are curly parts curling toward the rear cover on two sides of the rollable display, and a first extension stub, a second extension stub, a fourth extension stub, and a fifth extension stub in the antenna assembly extend into the space enclosed by the rollable display and the rear cover. In this way, a left side surface and a right side surface of the electronic device belong to the display, so that a screen-to-body ratio of the electronic device is high. This ensures that an enough long antenna can still be disposed when the metal frame in the electronic device is shortened.

In a possible implementation, two side edges of the metal middle plate respectively extend toward the top metal frame and the bottom metal frame to form the first extension stub, the second extension stub, the fourth extension stub, and the fifth extension stub. In this way, the metal middle plate is integrated with the first extension stub, the second extension stub, the fourth extension stub, and the fifth extension stub, and one end of each of the first extension stub, the second extension stub, the fourth extension stub, and the fifth extension stub can be grounded by using the metal middle plate. This avoids a case in which a spring plate is disposed between the extension stub and the metal middle plate for grounding.

In a possible implementation, the rollable display includes a glass layer and a display layer, there are first curly parts curling toward the rear cover on two sides of the glass layer, and there are second curly parts curling toward the rear cover on two sides of the display layer.

In a possible implementation, a curling angle of the first curly part is in a range of 90° to 180°.

A curling angle of the second curly part is in a range of 90° to 150°. In this way, the left and right side surfaces and partial rear surfaces of the electronic device are all display regions, so that a problem that the screen-to-body ratio is reduced due to existence of left and right black borders of the electronic device is avoided. In embodiments of this application, a high screen-to-body ratio of the electronic device is implemented.

In a possible implementation, the rear cover is a glass rear cover. In this way, interference caused by the glass rear cover to the antenna disposed in the electronic device is reduced, and it is ensured that the antenna in the electronic device has higher radiation efficiency.

### BRIEF DESCRIPTION OF DRAWINGS

FIG. 1 is a schematic diagram of antennas formed on a metal frame in an existing electronic device;
FIG. 2 is a schematic diagram of a three-dimensional structure of an electronic device according to an embodiment of this application;
FIG. 3 is a schematic diagram of a split structure of an electronic device according to an embodiment of this application;
FIG. 4 is a schematic diagram of a split structure of a display in an electronic device according to an embodiment of this application;
FIG. 5 is a schematic diagram of a rear structure of an electronic device according to an embodiment of this application;
FIG. 6 is a schematic diagram of a partial cross-sectional structure of a display and a rear cover in an electronic device according to an embodiment of this application;
FIG. 7 is a schematic diagram of an inner structure of an electronic device according to an embodiment of this application;
FIG. 8 is a schematic diagram of a structure of a metal middle plate, a top frame, and a bottom frame in an electronic device according to an embodiment of this application;
FIG. 9 is a schematic diagram of an electrical principle of an antenna in an electronic device according to an embodiment of this application;
FIG. 10 is a schematic diagram of a structure of a top antenna of an electronic device and a display layer of a display according to an embodiment of this application;
FIG. 11 is a schematic diagram of a structure of a bottom antenna of an electronic device and a display layer of a display according to an embodiment of this application;
FIG. 12 is a schematic diagram of a partial structure of an electronic device according to an embodiment of this application;
FIG. 13 is a schematic diagram of another partial structure of an electronic device according to an embodiment of this application;
FIG. 14 is a schematic diagram of another structure of a top antenna of an electronic device and a display layer of a display according to an embodiment of this application;
FIG. 15 is a schematic diagram of another structure of a bottom antenna of an electronic device and a display layer of a display according to an embodiment of this application;
FIG. 16 is a schematic diagram of another electrical principle of an antenna in an electronic device according to an embodiment of this application;
FIG. 17 is a schematic diagram of an electrical structure existing when a third antenna in an electronic device is a low-band antenna according to an embodiment of this application;
FIG. 18 is a schematic diagram of efficiency in different tuning states when a sixth antenna in an electronic device is a low-band antenna according to an embodiment of this application;
FIG. 19 is a schematic diagram of radiation efficiency of a fourth antenna and a fifth antenna in different tuning states when a sixth antenna in an electronic device is a low-band antenna according to an embodiment of this application;
FIG. 20 is a schematic diagram of radiation efficiency existing when a fourth antenna in an electronic device is a medium- and high-band MIMO antenna according to an embodiment of this application;
FIG. 21 is a schematic diagram of return loss curves of a fourth antenna, a fifth antenna, and a sixth antenna in an electronic device according to an embodiment of this application;
FIG. 22 is a schematic diagram of current distribution during resonance of a sixth antenna in an electronic device according to an embodiment of this application;
FIG. 23 is a schematic diagram of current distribution on a frame, a display layer of a display, and a metal middle plate during low-frequency resonance in an electronic device according to an embodiment of this application;
FIG. 24 is a schematic diagram of initial radiation efficiency of a fourth antenna in an electronic device and efficiency existing when the fourth antenna is set to a GPS antenna and a Wi-Fi antenna through matching according to an embodiment of this application;
FIG. 25 is a schematic diagram of current distribution during resonance of a fourth antenna in an electronic device according to an embodiment of this application;
FIG. 26 is a schematic diagram of current distribution during resonance of a fifth antenna in an electronic device according to an embodiment of this application;
FIG. 27 is a schematic diagram of radiation efficiency of a fourth antenna, a fifth antenna, and a sixth antenna in an electronic device after matching and an isolation degree between the fourth antenna and the fifth antenna according to an embodiment of this application;
FIG. 28 is a schematic diagram of still another structure of a top antenna of an electronic device and a display layer of a display according to an embodiment of this application;
FIG. 29 is a schematic diagram of another electrical principle of an antenna in an electronic device according to an embodiment of this application; and
FIG. 30 is a schematic diagram of radiation efficiency of the seventh antenna in FIG. 29.

### Description of reference numerals:

100-mobile phone; 10-display; 11-display layer; 111-second curly part; 111a-connection structure; 12-glass layer; 121-first curly part; 13a-bracket; 13b-bracket; 20-middle frame; 21-top frame; 211-first radiator;
211a-mounting part; 211b-feed point structure; 211c-plug part; 212-second radiator; 213-third radiator;
2131-first matching circuit; 2132-second matching circuit; 2333-third matching circuit; 2134-fourth matching circuit;
2135-first tuning switch; 213a-first tuning circuit; 21a-first extension stub; 21b-second extension stub;
214-seventh radiator; 215-eighth radiator; 216a-second tuning circuit; 22-metal middle plate; 23-bottom frame;
231-fourth radiator; 232-fifth radiator; 233-sixth radiator; 23a-fourth extension stub;
23b-fifth extension stub; 201-first antenna; 202-second antenna; 203-third antenna; 204-fourth antenna; 205-fifth antenna; 206-sixth antenna; 2017-seventh antenna; 208-eighth antenna; 30-circuit board;
31-first circuit board; 32-second circuit board; 40-rear cover; a1-first feed point; a2-second feed point;
a3-third feed point; a4-fourth feed point; a5-fifth feed point; a6-sixth feed point; a7-seventh feed point;
a7-eighth feed point; b1-first feed; b2-second feed; b3-third feed; b4-fourth feed;
b5-fifth feed; b6-sixth feed; b7-seventh feed; b8-eighth feed; c1-first ground point;
c2-second ground point; c3-third ground point; c4-fourth ground point; c5-fifth ground point; c6-sixth ground point;
c7-seventh ground point; c8-eighth ground point; d1-first tuning contact; d2-second tuning contact;
a, b, c, d-gap; a11-spring plate.

### DESCRIPTION OF EMBODIMENTS

Embodiments of this application provide an electronic device, including but not limited to a mobile or fixed terminal with an antenna, such as a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), a wearable device, a virtual reality device, a wireless USB flash drive, a Bluetooth speaker/headset, or a vehicle-mounted factory-installed device.

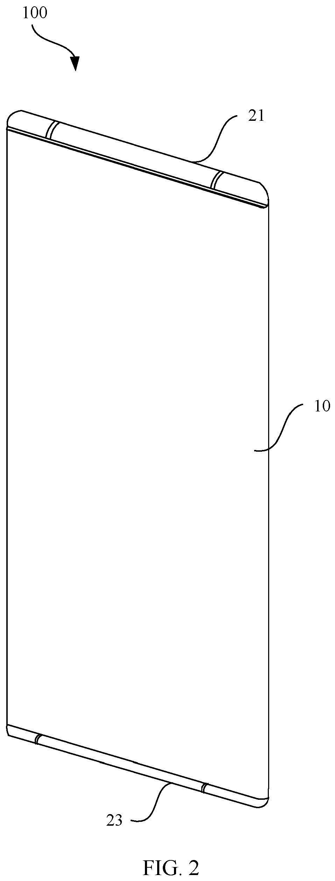

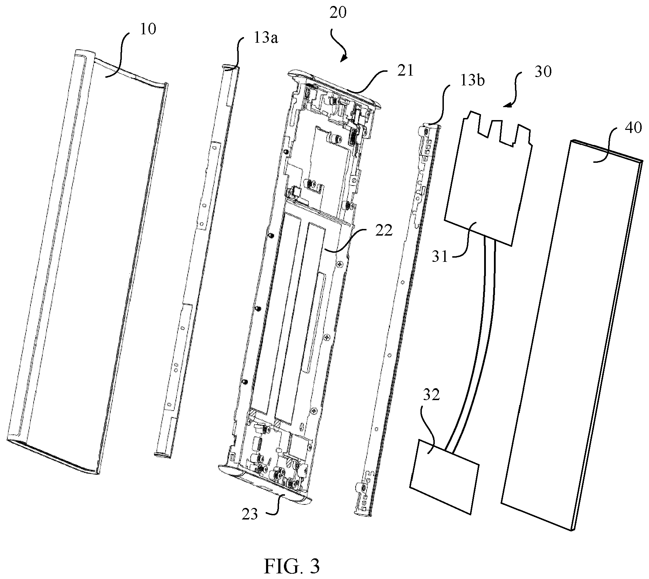

In embodiments of this application, an example in which the foregoing electronic device is a mobile phone 100 is used for description. The mobile phone 100 provided in embodiments of this application may be a mobile phone with a rollable display. FIG. 2 and FIG. 3 respectively show an overall structure and a split structure of the mobile phone 100. As shown in FIG. 2 and FIG. 3, the mobile phone 100 may include a display 10, a rear cover 40, a middle frame 20, and a circuit board 30. The circuit board 30 may be disposed on a surface that is of the middle frame 20 and that faces the rear cover 40, and the display 10 and the rear cover 40 may be respectively located on two sides of the middle frame 20. Components are disposed at the top and the bottom of the mobile phone 100. Therefore, in this embodiment of this application, the circuit board 30 may include a first circuit board 31 and a second circuit board 32. The first circuit board 31 and the second circuit board 32 may be electrically connected by using a flexible printed circuit or a leading wire. The first circuit board 31 may be located at an upper part of the middle frame 20, and the second circuit board 32 may be located at a lower part of the middle frame 20. In this way, interfaces disposed at the top and the bottom of the mobile phone 100 can be electrically connected to the circuit board 30.

To increase a screen-to-body ratio, in this embodiment of this application, as shown in FIG. 3, left and right sides of the display 10 curl toward the rear cover 40, so that the left and right sides of the electronic device are display regions of a screen. In this way, the mobile phone 100 has no black border in left and right directions, and a bezel-less "full view screen" is implemented on the left and right sides of the electronic device.

In this embodiment of this application, because the left and right sides of the display 10 curl to a rear surface of the mobile phone 100, as shown in FIG. 3, the middle frame 20 includes a metal middle plate 22, a top frame 21, and a bottom frame 23. The top frame 21 and the bottom frame 23 may be respectively located at the top and the bottom of the metal middle plate 22. When assembly is completed, the top frame 21 and the bottom frame 23 are respectively located at the top and the bottom of the display 10 and the rear cover 40 (as shown in FIG. 2). The top frame 21 and the bottom frame 23 are exposed, and the metal middle plate 22 is located in space enclosed by the display 10, the rear cover 40, the top frame 21, and the bottom frame 23. In this way, a display surface of the mobile phone 100 has two frames: the top frame 21 and the bottom frame 23, there is no frame on side surfaces of the display surface, and the screen-to-body ratio of the mobile phone 100 may reach 95%. In this embodiment of this application, a material of the metal middle plate 22 includes but is not limited to an aluminum alloy, stainless steel, a steel-aluminum composite die-casting plate, or a titanium alloy.

The top frame 21 and the bottom frame 23 may be metal frames, or the top frame 21 and the bottom frame 23 may be non-metal frames, for example, may be ceramic frames or glass frames. When the top frame 21 and the bottom frame 23 are metal frames, a material of the metal frames includes but is not limited to an aluminum alloy, stainless steel, a steel-aluminum composite die-casting plate, or a titanium alloy.

To help the two sides of the display 10 curl toward the rear cover 40, in this embodiment of this application, the mobile phone 100 further includes brackets located on two sides of the metal middle plate 22, for example, a bracket 13a and a bracket 13b. The bracket 13a and the bracket 13b are located between the top frame 21 and the bottom frame 23. The bracket 13a may be connected to one side of the metal middle plate 22, and the bracket 13b may be connected to the other side of the metal middle plate 22. When the two sides of the display 10 curl, the bracket 13a and the bracket 13b provide support for two curly parts of the display 10, and the two sides of the display 10 may curl toward the rear cover 40 under support of the brackets.

The bracket 13a and the bracket 13b may be connected to the metal middle plate 22 through clamping, adhesion, or fasteners (for example, screws). In this embodiment of this application, the bracket 13a and the bracket 13b may be non-metal brackets, for example, may be plastic brackets. In this way, a weight of the mobile phone 100 can be reduced.

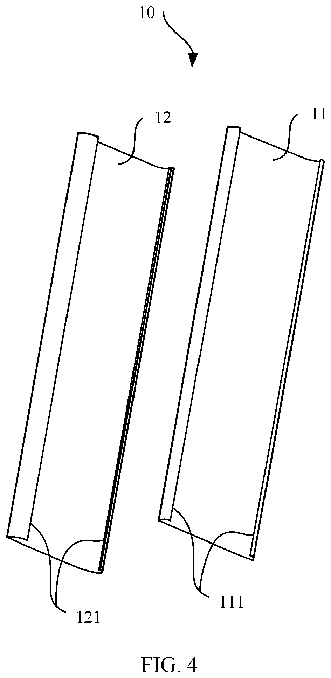

In this embodiment of this application, because the display 10 needs to be curled, the display 10 may be a flexible display 10. For example, the flexible display 10 may be an organic light-emitting diode (Organic Light-Emitting Diode, OLED) display. Generally, as shown in FIG. 4, when the display 10 is an OLED display, the display 10 may include a display layer 11 and a glass layer 12. The glass layer 12 covers the display layer 11, and a size of the glass layer 12 may be greater than or equal to a size of the display layer 11. Because the display needs to be curled, the glass layer 12 may be a bendable glass layer. The display layer 11 may include a plurality of function layers. For example, the plurality of function layers may be film layers such as an organic light-emitting layer, an anode layer, a cathode layer, and a thin film transistor (Thin Film Transistor, TFT) layer. Therefore, the display layer 11 includes a plurality of metal layers. In another example, the display 10 may further include a touch layer (not shown), and the touch layer may be disposed between the display layer 11 and the glass layer 12. Alternatively, the touch layer may be integrated into the display layer 11 to form a touch display panel integrating a touch function and a display function, and the glass layer 12 covers the touch display panel.

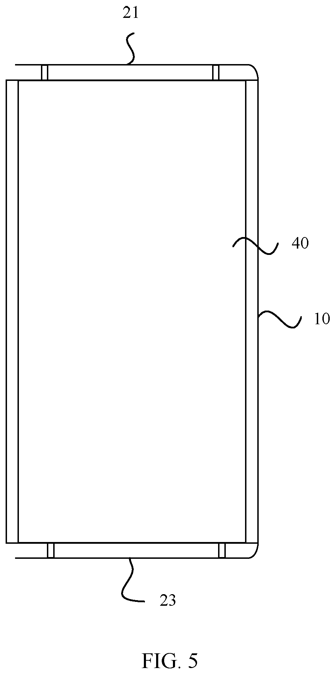

After the two sides of the display 10 curl toward the rear cover 40, curly parts are formed on the two sides of the display 10. For example, as shown in FIG. 4, first curly parts 121 are formed on two sides of the glass layer 12 in a curling process, and second curly parts 111 are formed on two sides of the display layer 11 in the curling process. As shown in FIG. 5, the curly parts of the display 10 extend to the rear cover 40, and the rear cover 40 may be connected to the glass layer 12 of the display 10.

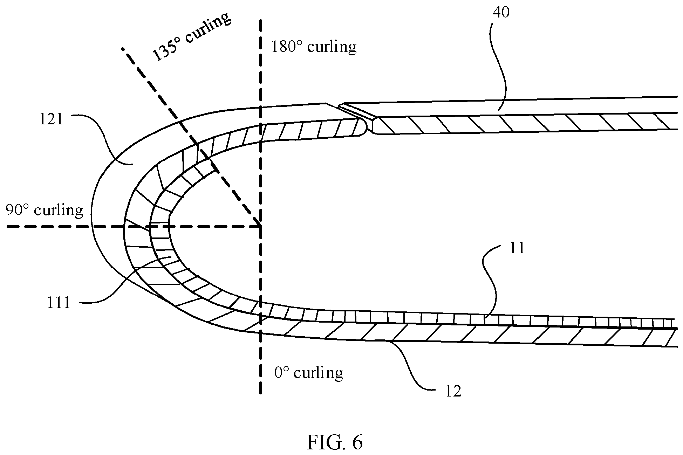

As shown in FIG. 6, a curling angle of the first curly part 121 of the glass layer 12 in the display 10 may be in a range of 90° to 180°. For example, in FIG. 6, the curling angle of the first curly part 121 of the glass layer 12 in the display 10 may be 155°, and the two sides of the glass layer 12 curl from the display surface to the rear cover 40. In this way, both a left side surface and a right side surface of the mobile phone 100 belong to the glass layer 12. Alternatively, in another example, the curling angle of the first curly part 121 of the glass layer 12 may be 135°. The curling angle of the first curly part 121 may be any angle between 90° and 180°.

In this embodiment of this application, a curling angle of the second curly part 111 of the display layer 11 in the display 10 may be in a range of 90° to 150°. For example, in FIG. 6, the curling angle of the second curly part 111 of the display layer 11 in the display 10 may be 135°. In this way, the left and right side surfaces and partial rear surfaces of the electronic device are all display regions, so that a problem that the screen-to-body ratio is reduced due to existence of left and right black borders of the electronic device is avoided. Certainly, in this embodiment of this application, the curling angle of the second curly part 111 of the display layer 11 in the display 10 may be any value between 150° and 180°. For example, the curling angle of the second curly part of the display layer 11 may be 180°.

It should be noted that, in the foregoing description, the curling angle ranges of the first curly part 121 and the second curly part 111 may include endpoint values. For example, when the curling angle of the first curly part 121 is in the range of 90° to 180°, the endpoint value 90° and the endpoint value 180° are included.

In the following description of embodiments of this application, an example in which the second curly part 111 of the display layer 11 in the display 10 curls by 135° and the first curly part 121 of the glass layer 12 curls by 180° in FIG. 6 is used for description.

In a possible implementation, in this embodiment of this application, the top frame 21 and the bottom frame 23 may be metal frames. For example, a material of the top frame 21 and the bottom frame 23 may be an aluminum alloy, stainless steel, a steel-aluminum composite die-casting plate, or a titanium alloy. The rear cover 40 may be a glass rear cover.

When the top frame 21 and the bottom frame 23 are metal frames, the top frame 21 and the bottom frame 23 may be used as radiators of an antenna. However, because the display 10 of the electronic device is curly, both the left side surface and the right side surface of the electronic device belong to the glass layer 12. In this case, neither the left side surface nor the right side surface of the electronic device can be used as an antenna. For example, for a mobile phone 100 with a width of 75 mm, in the conventional technology (with reference to antenna distribution in FIG. 1), a total length of metal frames that can be used as antennas may be 210 mm (top: 75 + 15 + 15 = 105 mm, bottom: 75 + 15 + 15 = 105 mm). However, after the display 10 of the mobile phone 100 curls, because side surfaces belong to the glass layer 12, metal frames that can be used as antennas include only the top frame 21 and the bottom frame 23. A length of the metal frames that can be used as antennas is 150 mm. As a result, the length of the metal frames that can be used as antennas is reduced by approximately 30%. In this case, there is no sufficient length for arranging all antennas. If an antenna bracket or an antenna separated from the top frame 21 and the bottom frame 23 is disposed at a position close to the curly part of the display 10 in the mobile phone 100 to increase an antenna length, because the display layer 11 of the display 10 has a metal layer, and the metal layer curls upward at the curly part, the metal layer in the display layer 11 shields a radiation aperture of a side antenna of the mobile phone 100, and consequently, radiation efficiency of the antenna disposed on the side of the mobile phone 100 is greatly reduced.

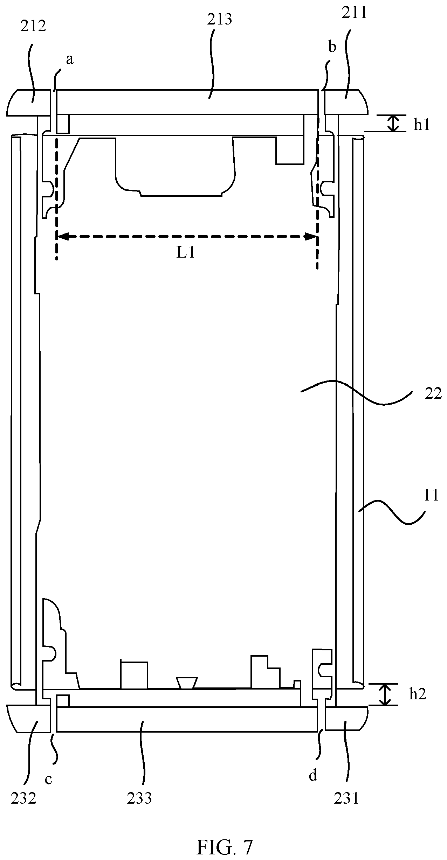

Based on the foregoing description, in this embodiment of this application, as shown in FIG. 7, there are at least two gaps on each of the top frame 21 and the bottom frame 23. For example, there is a gap a and a gap b on the top frame 21. The gap a and the gap b divide the top frame 21 into a first radiator 211, a second radiator 212, and a third radiator 213 located between the first radiator 211 and the second radiator 212. There is a gap c and a gap d on the bottom frame 23. The gap c and the gap d divide the bottom frame 23 into a fourth radiator 231, a fifth radiator 232, and a sixth radiator 233 located between the fourth radiator 231 and the fifth radiator 232.

For example, as shown in FIG. 7, lengths L1 of the third radiator 213 and the sixth radiator 233 may be in a range of 50 mm to 60 mm. For example, the length of the third radiator 213 may be 53 mm, or the length of the third radiator 213 may be 55 mm. The lengths of the third radiator 213 and the sixth radiator 233 may be the same or may be different.

In this embodiment of this application, as shown in FIG. 7, to prevent the metal layer in the display layer 11 and the metal middle plate 22 from interfering with the radiators, a minimum distance h1 between the metal middle plate 22 or the display layer 11 and each of the first radiator 211, the second radiator 212, and the third radiator 213 may be in a range of 1 mm to 1.4 mm. For example, the minimum distance h1 between the metal middle plate 22 or the display layer 11 and each of the first radiator 211, the second radiator 212, and the third radiator 213 may be 1.2 mm, or may be 1.3 mm. In this way, it can be ensured that clearances of the first radiator 211, the second radiator 212, and the third radiator 213 may be in a range of 1 mm to 1.4 mm.

For example, as shown in FIG. 7, a minimum distance h2 between the metal middle plate 22 or the display layer 11 and each of the fourth radiator 231, the fifth radiator 232, and the sixth radiator 233 may be in a range of 1.2 mm to 1.4 mm. For example, the minimum distance h1 between the metal middle plate 22 or the display layer 11 and each of the fourth radiator 231, the fifth radiator 232, and the sixth radiator 233 may be 1.25 mm, or may be 1.35 mm. In this way, it can be ensured that clearances of the fourth radiator 231, the fifth radiator 232, and the sixth radiator 233 may be in a range of 1.2 mm to 1.4 mm.

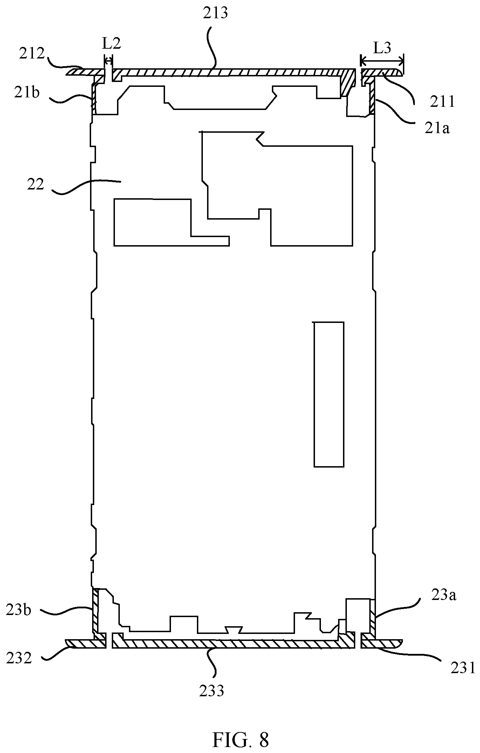

For example, as shown in FIG. 8, lengths L3 of the first radiator 211, the second radiator 212, the fourth radiator 231, and the fifth radiator 232 may be in a range of 8 mm to 10 mm. For example, the lengths L3 of the first radiator 211, the second radiator 212, the fourth radiator 231, and the fifth radiator 232 may be 8.75 mm, or the lengths L3 of the first radiator 211, the second radiator 212, the fourth radiator 231, and the fifth radiator 232 may be 9 mm. In this embodiment of this application, the lengths of the first radiator 211, the second radiator 212, the fourth radiator 231, and the fifth radiator 232 may be the same or may be different.

For example, as shown in FIG. 8, gap widths L2 of the gap a, the gap b, the gap c, and the gap d may be in a range of 1 mm to 1.5 mm. For example, the gap widths L2 of the gap a, the gap b, the gap c, and the gap d may be 1.2 mm, or the gap widths L2 of the gap a, the gap b, the gap c, and the gap d may be 1.4 mm.

It should be noted that, when the fourth radiator 231, the fifth radiator 232, and the sixth radiator 233 are radiation stubs of a main antenna (Main Antenna) of the mobile phone 100, clearances of the fourth radiator 231, the fifth radiator 232, and the sixth radiator 233 are greater than clearances of the first radiator 211, the second radiator 212, and the third radiator 213. This ensures that the main antenna of the mobile phone 100 has higher radiation efficiency.

In this embodiment of this application, during assembly of the mobile phone, a plastic material may be injected into each gap and a spacing region between the frame and the metal middle plate in a nano-injection molding manner, so that each frame and the metal middle plate form an overall structure.

In this embodiment of this application, to increase a length of the antenna, at least one extension stub is further included. For example, as shown in FIG. 8, four extension stubs are disposed: a first extension stub 21a, a second extension stub 21b, a fourth extension stub 23a, and a fifth extension stub 23b. One end of the first extension stub 21a is electrically connected to the first radiator 211, and the other end of the first extension stub 21a extends into space enclosed by the display 10 and the rear cover 40. In this way, the first extension stub 21a of a first antenna 201 is embedded inside the mobile phone. The first radiator 211 and the first extension stub 21a form a radiation stub of the first antenna 201. One end of the second extension stub 21b is electrically connected to the second radiator 212, and the other end of the second extension stub 21b extends into the space enclosed by the display 10 and the rear cover 40. The second radiator 212 and the second extension stub 21b form a radiation stub of a second antenna 202. One end of the fourth extension stub 23a is electrically connected to the fourth radiator 231, and the other end of the fourth extension stub 23a extends into the space enclosed by the display 10 and the rear cover 40. The fourth radiator 231 and the fourth extension stub 23a form a radiation stub of a fourth antenna 204. One end of the fifth extension stub 23b is electrically connected to the fifth radiator 232, and the other end of the fifth extension stub 23b extends into the space enclosed by the display 10 and the rear cover 40. The fifth radiator 232 and the fifth extension stub 23b form a radiation stub of a fifth antenna 205.

In this embodiment of this application, a material of the first extension stub 21a, the second extension stub 21b, the fourth extension stub 23a, and the fifth extension stub 23b may be the same as or different from the material of the metal middle plate 22, the top frame 21, and the bottom frame 22. For example, in this embodiment of this application, the material of the first extension stub 21a, the second extension stub 21b, the fourth extension stub 23a, and the fifth extension stub 23b may include but is not limited to an aluminum alloy, stainless steel, a steel-aluminum composite die-casting plate, or a titanium alloy.

In this embodiment of this application, the first extension stub 21a, the second extension stub 21b, the fourth extension stub 23a, and the fifth extension stub 23b are added. In this way, the length of the antenna is increased, so that antenna length insufficiency is effectively compensated for. In addition, the added first extension stub 21a, second extension stub 21b, fourth extension stub 23a, and fifth extension stub 23b are located in the space enclosed by the display 10 and the rear cover 40, and the first radiator 211, the second radiator 212, the fourth radiator 231, and the fifth radiator 232 that are electrically connected to the first extension stub 21a, the second extension stub 21b, the fourth extension stub 23a, and the fifth extension stub 23b are located at the top and the bottom of the mobile phone 100. In this way, the first radiator 211, the second radiator 212, the fourth radiator 231, and the fifth radiator 232 can radiate outward, so that antenna radiation efficiency is ensured on the basis of extending the antenna.

In this embodiment of this application, after the other ends of the first extension stub 21a, the second extension stub 21b, the fourth extension stub 23a, and the fifth extension stub 23b extend into the space enclosed by the display 10 and the rear cover 40, as shown in FIG. 8, the other ends of the first extension stub 21a, the second extension stub 21b, the fourth extension stub 23a, and the fifth extension stub 23b may be connected to the metal middle plate 22 to implement grounding (because the metal middle plate 22 is electrically connected to a ground point of the circuit board 30), or may be connected to the ground point of the circuit board 30 to implement grounding.

In this embodiment of this application, when the first extension stub 21a, the second extension stub 21b, the fourth extension stub 23a, and the fifth extension stub 23b are disposed in the space enclosed by the display 10 and the rear cover 40, the first extension stub 21a, the second extension stub 21b, the fourth extension stub 23a, and the fifth extension stub 23b may be disposed close to space enclosed by the second curly parts 111 of the display layer 11. For example, the first extension stub 21a, the second extension stub 21b, the fourth extension stub 23a, and the fifth extension stub 23b may be wrapped by the second curly parts 111 of the display layer 11. Alternatively, the first extension stub 21a, the second extension stub 21b, the fourth extension stub 23a, and the fifth extension stub 23b may be disposed in an extension manner in a direction parallel to an axial direction of the second curly parts 111. Alternatively, the first extension stub 21a, the second extension stub 21b, the fourth extension stub 23a, and the fifth extension stub 23b may be disposed obliquely in the space enclosed by the display 10 and the rear cover 40.

In this embodiment of this application, when the first extension stub 21a, the second extension stub 21b, the fourth extension stub 23a, and the fifth extension stub 23b are respectively connected to the first radiator 211, the second radiator 212, the fourth radiator 231, and the fifth radiator 232, T-shaped radiation stubs may be formed.

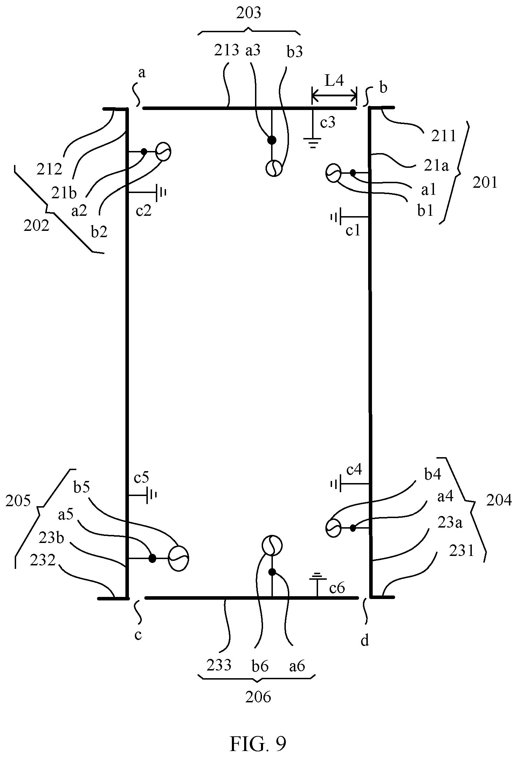

In this embodiment of this application, the mobile phone 100 may include at least one antenna, for example, may include one or more antennas. For example, as shown in FIG. 9, the mobile phone 100 may include six antennas: a first antenna 201, a second antenna 202, a third antenna 203, a fourth antenna 204, a fifth antenna 205, and a sixth antenna 206. The first antenna 201, the second antenna 202, and the third antenna 203 may be located at the top of the mobile phone 100, and the fourth antenna 204, the fifth antenna 205, and the sixth antenna 206 may be located at the bottom of the mobile phone 100. The second antenna 202 and the third antenna 203 may be diversity antennas (Div Antenna), and the first antenna 201 may be a Wi-Fi antenna, a Bluetooth antenna, and a GPS antenna. To be specific, the first antenna 201 may be a dual-band antenna (the Wi-Fi antenna and the Bluetooth antenna use one band, and the GPS antenna uses another band). The fifth antenna 205 and the sixth antenna 206 may be main antennas (Main Antenna), and the fourth antenna may be a medium- and high-band multiple-input multiple-output (Multiple-Input Multiple-Output, MIMO) antenna. When the fifth antenna 205 and the sixth antenna 206 are main antennas, the main antennas are located at the bottom of the mobile phone, so that a specific absorption rate (Specific Absorption Rate, SAR) of the mobile phone 100 is relatively low.

For example, the first antenna 201 may include the first radiator 211, the first extension stub 21a, a first feed b1, a first feed point a1, and a first ground point c1. Both the first feed point a1 and the first ground point c1 are electrically connected to the first extension stub 21a, the first feed b1 feeds a high-frequency current into the first extension stub 21a through the first feed point a1, and the high-frequency current is converted on the first extension stub 21a and the first radiator 211 and is transmitted in an electromagnetic wave manner. In this embodiment of this application, the first extension stub 21a and the first radiator 211 are the radiation stub of the first antenna 201.

The second antenna 202 may include the second radiator 212, the second extension stub 21b, a second feed b2, a second feed point a2, and a second ground point c2. Both the second feed point a2 and the second ground point c2 are electrically connected to the second extension stub 21b. The second feed b2 is electrically connected to the second feed point a2, and the second extension stub 21b and the second radiator 212 are the radiation stub of the second antenna 202.

Disposition of the first extension stub 21a and the second extension stub 21b increases lengths of the first antenna 201 and the second antenna 202, so that more antennas can be disposed.

The third antenna 203 may include the third radiator 213, a third feed b3, a third feed point a3, and a third ground point c3. Both the third feed point a3 and the third ground point c3 are connected to the third radiator 213, and the third feed b3 is electrically connected to the third feed point a3.

In this embodiment of this application, the first antenna 201, the second antenna 202, and the third antenna 203 disposed at the top of the mobile phone 100 respectively have the first feed point a1, the second feed point a2, and the third feed point a3. In this way, the antennas at the top of the mobile phone 100 have three independent feeding ports. One of the first antenna 201, the second antenna 202, and the third antenna 203 may be a low-band antenna, another one may be a medium- and high-band antenna, and the 3rd antenna may be a MIMO antenna covering medium and high frequencies. For example, the first antenna 201 and the third antenna 203 may be diversity antennas (Div Antenna) covering low, medium, and high frequencies, and the second antenna 202 may be a MIMO antenna. Alternatively, the second antenna 202 and the third antenna 203 may be diversity antennas covering low, medium, and high frequencies, and the first antenna 201 may be a Bluetooth antenna (2400 MHz), a Wi-Fi antenna (2400 MHz), and a GPS antenna. The Bluetooth antenna, the Wi-Fi antenna, and the GPS antenna may share the first antenna 201, and the first antenna 201 is a dual-band antenna. Alternatively, the first antenna 201 or the second antenna 202 may be an antenna covering a 5G band, for example, an N77 band (3300 MHz to 4200 MHz) and an N79 band (4400 MHz to 5000 MHz) in the 5G band. Compared with a case in which an antenna has one or two independent feeding ports in the conventional technology, in this embodiment of this application, because three independent feeding ports are disposed, one more antenna that can cover medium and high bands can be designed. In this way, the antennas at the top of the mobile phone 100 can be designed more freely, and more bands can be covered. It should be noted that, in this embodiment of this application, a quantity of feeding ports disposed at the top of the mobile phone 100 includes but is not limited to three.

The fourth antenna 204 may include the fourth radiator 231, the fourth extension stub 23a, a fourth feed b4, a fourth feed point a4, and a fourth ground point c4. Both the fourth feed point a4 and the fourth ground point c4 are electrically connected to the fourth extension stub 23a. The fourth extension stub 23a increases a length of the fourth antenna 204.

The fifth antenna 205 may include the fifth radiator 232, the fifth extension stub 23b, a fifth feed b5, a fifth feed point a5, and a fifth ground point c5. Both the fifth feed point a5 and the fifth ground point c5 are electrically connected to the fifth extension stub 23b. The fifth extension stub 23b increases a length of the fifth antenna 205.

The sixth antenna 206 may include the sixth radiator 233, a sixth feed b6, a sixth feed point a6, and a sixth ground point c6. Both the sixth feed point a6 and the sixth ground point c6 are connected to the sixth radiator 233.

In this embodiment of this application, the fourth antenna 204, the fifth antenna 205, and the sixth antenna 206 disposed at the bottom of the mobile phone 100 respectively have the fourth feed point a4, the fifth feed point a5, and the sixth feed point a6. In this way, the antennas at the bottom of the mobile phone 100 have three independent feeding ports, so that the antennas at the bottom of the mobile phone 100 can be designed more freely. One of the fourth antenna 204, the fifth antenna 205, and the sixth antenna 206 may be a low-band antenna, another one may be a medium- and high-band antenna, and the 3rd antenna may be designed as an antenna that can cover medium and high frequencies. In this way, the three antennas at the bottom of the mobile phone 100 can cover more bands. In this embodiment of this application, the fifth antenna 205 and the sixth antenna 206 may be main antennas, and the fourth antenna may be a MIMO antenna or an antenna on a 5G band (for example, an N77 band (3300 MHz to 4200 MHz) and an N79 band (4400 MHz to 5000 MHz)).

Each feed and each feed point in FIG. 9 may be located on the circuit board 30, and each ground point may be electrically connected to a ground point of the metal middle plate 22 or the circuit board 30 to implement grounding.

In this embodiment of this application, when the third ground point c3 of the third antenna 203 is disposed, as shown in FIG. 9, the third ground point c3 may be closer to the first radiator 211 compared with the second radiator 212. For example, a horizontal distance L4 between the third ground point c3 and the gap b may be 2.6 mm, and a horizontal distance between the third ground point c3 and the gap a may be 53 mm. Alternatively, the third ground point c3 of the third antenna 203 may be close to the second radiator 212. The third ground point c3 of the third antenna 203 is disposed close to the first radiator 211 or the second radiator 212, so that interference caused by the third antenna 203 to a nearby radiator under different resonance is reduced. This ensures stable performance of the radiator close to the third ground point c3.

Likewise, the sixth ground point c6 of the sixth antenna 206 may be shown in FIG. 9. Compared with a distance between the sixth ground point c6 and the fifth radiator 232, a distance between the sixth ground point c6 and the fourth radiator 231 is shorter. For example, a horizontal distance between the sixth ground point c6 and the gap d may be 2.6 mm, and a horizontal distance between the sixth ground point c6 and the gap c may be 53 mm. Alternatively, the sixth ground point c6 of the sixth antenna 206 may be close to the fifth radiator 232. The sixth ground point c6 of the sixth antenna 206 is disposed close to the fourth radiator 231 or the fifth radiator 232, so that performance of a radiator close to the sixth ground point c6 is not prone to be affected by the sixth antenna 206.

In this embodiment of this application, because the third radiator 213 is relatively long, the third antenna 203 may be a low-band antenna with an operating band of 700 MHz to 960 MHz. The first antenna 201 and the second antenna 202 may be medium- and high-band antennas with operating bands of 1805 MHz to 2690 MHz. In this way, the third antenna 203 and the second antenna 202 may be MIMO antennas covering low, medium, and high bands, and the first antenna 201 may be a dual-band antenna covering a Wi-Fi antenna (band: 2400 MHz to 2500 MHz) and a GPS antenna (operating band: 1575±100 MHz). Alternatively, the first antenna 201 may be a medium- and high-band MIMO antenna.

Because the sixth radiator 233 is relatively long, the sixth antenna 206 may be a low-band antenna. The fourth antenna 204 and the fifth antenna 205 may be medium- and high-band antennas. For example, the sixth antenna 206 and the fifth antenna 205 may be main antennas covering low, medium, and high bands (for example, the low band is 700 MHz to 960 MHz, the medium band is 1710 MHz to 2200 MHz, and the high band is 2300 MHz to 2700 MHz), and the fourth antenna 204 may be a medium- and high-band MIMO antenna. Alternatively, the fourth antenna 204 may be a dual-band antenna covering a Wi-Fi antenna and a GPS antenna. It should be noted that in this embodiment of this application, types of the first antenna 201, the second antenna 202, the third antenna 203, the fourth antenna 204, the fifth antenna 205, and the sixth antenna 206 include but are not limited to the foregoing antennas.

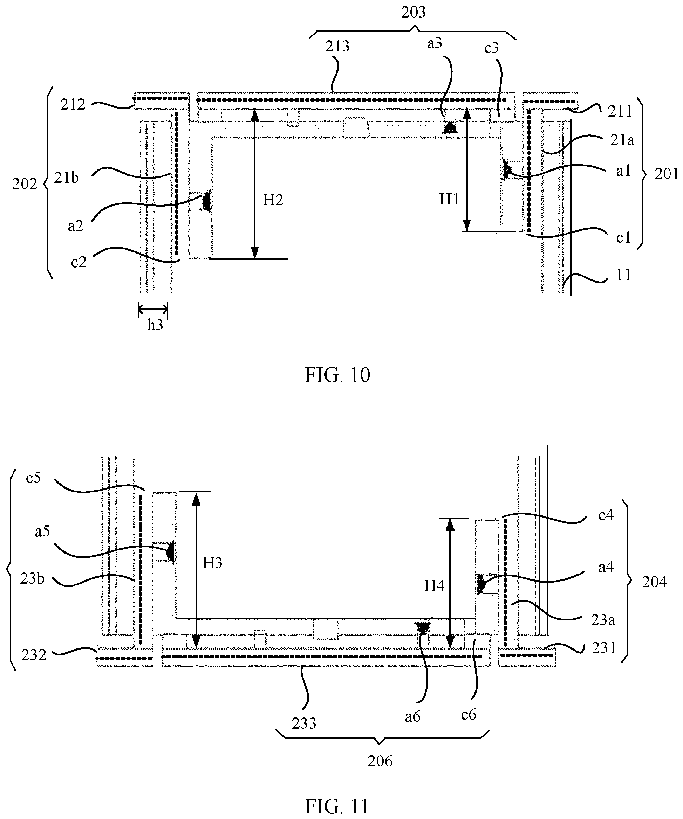

In a possible implementation, as shown in FIG. 10, a length H1 of the first extension stub 21a may be in a range of 10 mm to 25 mm. For example, the length H1 of the first extension stub 21a may be 23 mm, or the length H1 of the first extension stub 21a may be 11 mm. A length H2 of the second extension stub 21b may be in a range of 10 mm to 25 mm. For example, the length H2 of the second extension stub 21b may be 18 mm, or the length H1 of the first extension stub 21a may be 22 mm. In this way, the length of the antenna at the top of the mobile phone 100 is increased by at least 20 mm to 50 mm, so that antenna length insufficiency is effectively compensated for.

In this embodiment of this application, the first extension stub 21a and the second extension stub 21b are respectively radiation stubs of the first antenna 201 and the second antenna 202, and when the first extension stub 21a and the second extension stub 21b are disposed inside the mobile phone 100, clearances of the first extension stub 21a and the second extension stub 21b are not less than 0.5 mm. For example, a minimum distance h3 between the second extension stub 21b and an inner wall of the display layer 11 (for example, surfaces of the display layer 11 and the second curly part 111 that face the inside of the mobile phone in FIG. 6) may be 0.5 mm.

In this embodiment of this application, as shown in FIG. 11, a length H4 of the fourth extension stub 23a may be in a range of 10 mm to 25 mm. For example, the length H4 of the fourth extension stub 23a may be 23 mm, or the length H4 of the fourth extension stub 23a may be 11 mm. A length H3 of the fifth extension stub 23b may be in a range of 10 mm to 25 mm. For example, the length H3 of the fifth extension stub 23b may be 18 mm, or the length H3 of the fifth extension stub 23b may be 22 mm. In this way, the length of the antenna at the bottom of the mobile phone 100 is increased by at least 20 mm to 50 mm, so that insufficiency of the length of the antenna at the bottom of the mobile phone 100 is effectively compensated for.

Clearances of the fourth extension stub 23a and the fifth extension stub 23b are not less than 0.5 mm. For example, a minimum distance between the fourth extension stub 23a and the inner wall of the display layer 11 may be 0.5 mm. This ensures that the fourth extension stub 23a and the fifth extension stub 23b have clearance regions inside the mobile phone 100, so that the fourth extension stub 23a and the fifth extension stub 23b have good radiation efficiency.

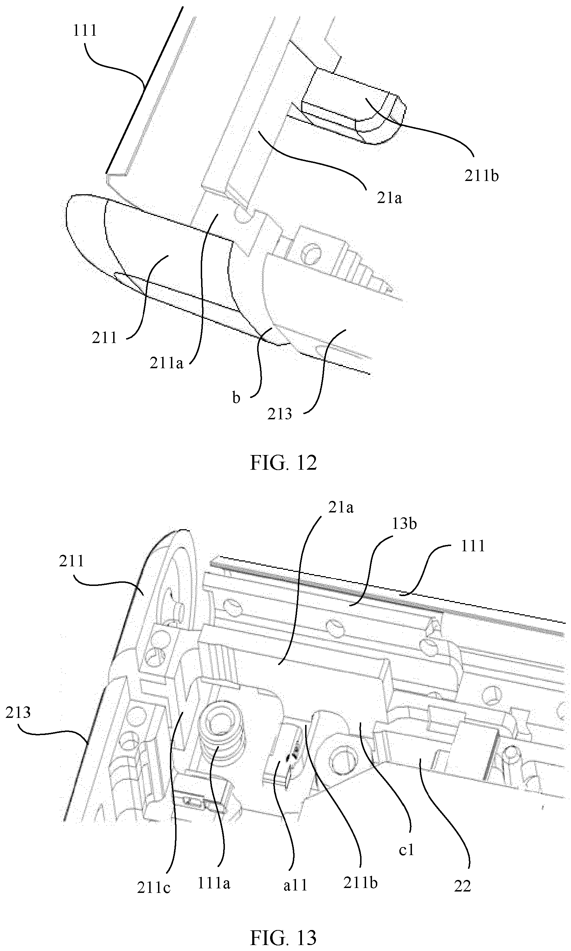

In a possible implementation, each extension stub may be connected to a corresponding radiator through welding, clamping, a fastener (for example, a screw), or integral molding. In this embodiment of this application, as shown in FIG. 12, the first radiator 211 has a mounting part 211a. As shown in FIG. 13, a plug part 211c that can be plugged into the mounting part 211a exists at an end that is of the first extension stub 21a and that is connected to the first radiator 211. The plug part 211c is connected to the mounting part 211a through a fastener (for example, a screw or a bolt). In this way, the first extension stub 21a is fastened to the first radiator 211. In this embodiment of this application, the connection manner shown in FIG. 13 may also be used between the remaining three extension stubs and corresponding radiators. Certainly, the four extension stubs and the corresponding radiators may be connected by using, but not limited to, the connection manner between the mounting part 211a and the plug part 211c, or may be connected by using another fitting structure.

In a possible implementation, the first extension stub 21a, the second extension stub 21b, the extension stub of the third antenna 203, and the fourth extension stub 23a each are in a suspended bridge structure in the mobile phone 100. For example, as shown in FIG. 13, one end of the first extension stub 21a is connected to the first radiator 211, the other end of the first extension stub 21a is connected to the metal middle plate 22, and the first extension stub 21a is in a suspended bridge structure between the first radiator 211 and the metal middle plate 22. In this embodiment, each extension stub may be a suspended bridge structure formed by extending a part of an edge of the metal middle plate 22 toward a corresponding radiator. For example, as shown in FIG. 13, a side edge of the metal middle plate 22 extends to the first radiator 211 in a suspended manner and is connected to the first radiator 211. Alternatively, a suspended bridge structure is excavated in a region that is of the metal middle plate 22 and that is close to the first radiator 211, and is used as the first extension stub 21a. In this way, one end of the first extension stub 21a is integrated with the metal middle plate 22, and the first ground point c1 is located on the metal middle plate 22. This avoids a case in which a spring plate is disposed between the first extension stub 21a and the metal middle plate 22 for grounding.

In this embodiment of this application, when each feed point is electrically connected to a radiator or an extension stub, a feed point structure may be disposed on the radiator or the extension stub. For example, as shown in FIG. 12, a feed point structure 211b is disposed on the first extension stub 21a, and the first feed point a1 is electrically connected to a spring plate a11. As shown in FIG. 13, after the circuit board 30 is mounted, the spring plate a11 abuts the feed point structure 211b to implement an electrical connection. In this embodiment of this application, the remaining feed points each may also be connected to a spring plate, a feed point structure abutting the spring plate is disposed on a radiator or an extension stub, and each feed point is electrically connected to the extension stub or the radiator through abutting between the spring plate and the feed point structure.

In this embodiment of this application, as shown in FIG. 13, a connection structure 111a is disposed at the display layer 11. The circuit board 30 and the display layer 11 may be connected by using the connection structure 111a and a fastener (for example, screw). For example, the connection structure 111a of the display layer 11 is connected to the ground point of the circuit board 30 by using the fastener. In this way, the display layer 11 is grounded.

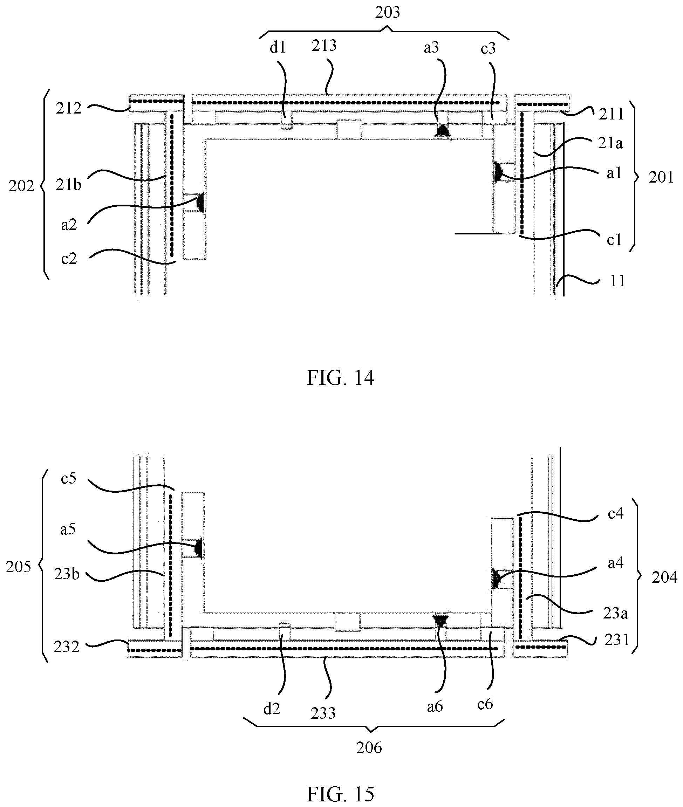

In a possible implementation, to enable a low-band antenna (for example, the third antenna 203 and the sixth antenna 206) to cover more bandwidths, in this embodiment of this application, as shown in FIG. 14, the third antenna 203 may further include a first tuning contact d1, and the first tuning contact d1 is configured to connect the third radiator 213 to a matching circuit. As shown in FIG. 15, the sixth antenna 206 may further include a second tuning contact d2, and the second tuning contact d2 is configured to connect the third radiator 213 to a matching circuit. In this embodiment of this application, the first tuning contact d1 and the second tuning contact d2 may be conductive sheets connected to the third radiator 213 and the sixth radiator 233.

In this embodiment of this application, positions at which the first tuning contact d1 and the second tuning contact d2 are connected to the third radiator 213 and the sixth radiator 233 are specifically set based on a tuning width. A longer distance between the position at which the first tuning contact d1 is connected to the third radiator 213 and a position at which the third feed point a3 is connected to the third radiator 213 indicates a larger tuning range. However, this affects radiation efficiency. Therefore, when a required band can be covered during tuning, the position at which the first tuning contact d1 is connected to the third radiator 213 may be set close to the position at which the third feed point a3 is connected to the third radiator 213. In this way, high radiation efficiency can be achieved. For example, when the sixth antenna 206 is a low-band antenna of a main antenna, and the third antenna 203 is a MIMO antenna, because the main antenna requires a large tuning range, and a tuning range of the MIMO antenna is smaller than the tuning range of the main antenna, a distance between points at which the sixth radiator 233 is connected to the second tuning contact d2 and the sixth feed point a6 is greater than a distance between points at which the third radiator 213 is connected to the first tuning contact d1 and the third feed point a3.

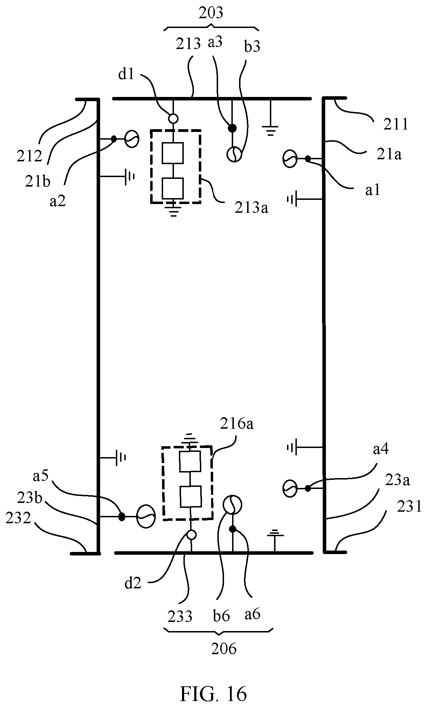

For example, as shown in FIG. 16, the third radiator 213 is electrically connected to a first tuning circuit 213a through the first tuning contact d1. The sixth radiator 233 is electrically connected to a second tuning circuit 216a through the second tuning contact d2. Through the first tuning circuit 213a, the third antenna 203 may switch to paths corresponding to different low bands. In this way, a bandwidth of the third antenna 203 can cover all of a bandwidth of 700 MHz to 960 MHz. Through the second tuning circuit 216a, the sixth antenna 206 may switch to paths corresponding to different low bands. This ensures that a bandwidth of the sixth antenna 206 can cover all of a bandwidth of 700 MHz to 960 MHz.

In a possible implementation, the first tuning circuit 213a and the second tuning circuit 216a each may include a tuning switch and at least one matching circuit, one end of the matching circuit is connected to the tuning switch, and the other end of the matching circuit is grounded. Specific structures of the tuning switch and the matching circuit are not limited. For example, the tuning switch may be one or more switches. Any switch may be a single-input multiple-output single-pole multi-throw switch, or may be a multiple-input multiple-output multi-pole multi-throw switch. This is not limited in this application. Any switch may be one or more switches connected in series and/or in parallel. This is not limited in this application. The matching circuit may be one capacitor, one inductor, a plurality of capacitors connected in series, a plurality of inductors connected in series, a plurality of capacitors connected in parallel, a plurality of inductors connected in parallel, at least one capacitor and at least one inductor that are connected in series, or at least one group of serially connected capacitors and at least one group of serially connected inductors that are connected in parallel. This is not limited in this application.

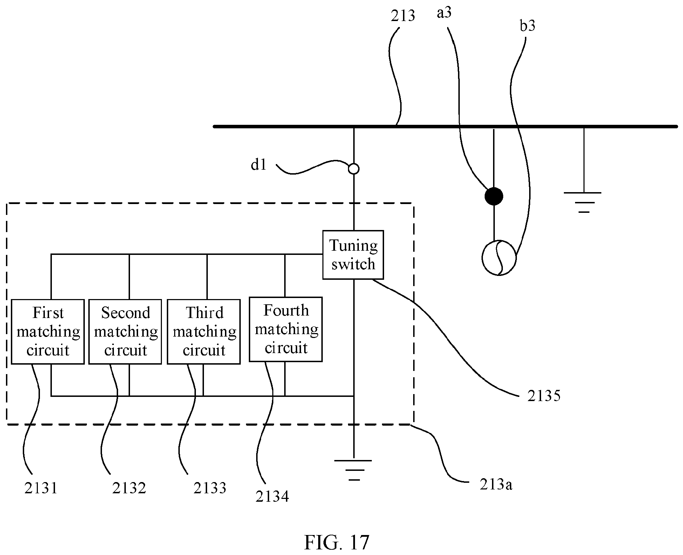

For example, as shown in FIG. 17, the first tuning circuit 213a includes a first tuning switch 2135 and four matching circuits: a first matching circuit 2131, a second matching circuit 2132, a third matching circuit 2133, and a fourth matching circuit 2134. The first tuning switch 2135 may be a single-pole four-throw switch (for example, SP4T), and the first tuning switch 2135 has four switching paths, for example, RF1, RF2, RF3, and RF4. The first matching circuit 2131, the second matching circuit 2132, the third matching circuit 2133, and the fourth matching circuit 2134 respectively correspond to RF1, RF2, RF3, and RF4. For example, when the mobile phone 100 needs to support B8 (GSM 900 MHz), B5 (GSM 850 MHz), B20 (GSM 800 MHz), and B28 (GSM 700 MHz), a relationship between switch statuses corresponding to B8, B5, B20, and B28 and the first matching circuit 2131, the second matching circuit 2132, the third matching circuit 2133, and the fourth matching circuit 2134 is shown in Table 1.

**Table 1**

| Band | Switch status | Inductance or capacitance |
|---|---|---|
| B28a | RF1 | First matching circuit 2131: 0.3 pF |
| B28b | All OFF | Open circuit |
| B20 | RF2 | Second matching circuit 2132: 47 nH |
| B5 | RF3 | Third matching circuit 2133: 30 nH |
| B8 | RF4 | Fourth matching circuit 2134: 18 nH |

In Table 1, it can be learned that when the mobile phone 100 needs to support B8 (GSM 900 MHz), the first tuning switch 2135 is switched to RF4. The fourth matching circuit 2134 connected on the path RF4 is an inductor of 18 nH. A larger inductance of a connected inductor indicates a lower resonance frequency. In Table 1, B28a is a band covered when the first tuning switch 2135 is switched to RF1 and is connected to a capacitor of 0.3 pF, and B28a is a band covered by the sixth antenna 206 after all paths of the first tuning switch 2135 are disconnected. In this embodiment of this application, the bandwidth of the sixth antenna 206 covers the entire bandwidth of the low band of 700 MHz to 960 MHz by using the foregoing four matching circuits.

Based on the foregoing description, in embodiments of this application, antennas in the following scenario 1 and scenario 2 are used as examples to perform simulation test.

### Scenario 1

In this embodiment of this application, the glass layer 12 of the display 10 curls by 180°, the display layer 11 curls by 135°, and the screen-to-body ratio reaches 95%. Clearances of the antennas: the fourth antenna 204, the fifth antenna 205, and the sixth antenna 206 at the bottom of the mobile phone 100 are less than or equal to 1.35 mm. A total length of the bottom frame 23 of the mobile phone 100 is 73.5 mm, widths of the gap c and the gap d are 1.5 mm, a length of the sixth radiator 233 is 53 mm, lengths of the fourth radiator 231 and the fifth radiator 232 are 8.75 mm, and lengths of the fourth extension stub 23a and the fifth extension stub 23b are 14.25 mm. Therefore, antenna radiation lengths of the fifth antenna 205 and the fourth antenna 204 are 23 mm. The sixth ground point c6 of the sixth antenna 206 is disposed close to the fourth radiator 231.

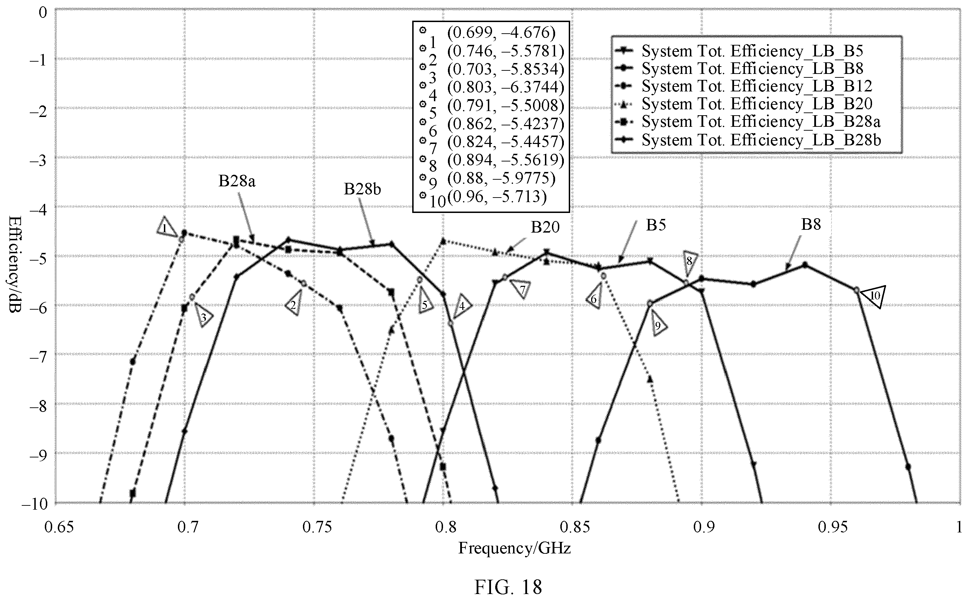

In this embodiment of this application, the sixth antenna 206 is disposed as a low-band antenna. The sixth antenna 206 is connected to a tuning circuit and has a frequency tuning function. A bandwidth of approximately 80 MHz needs to be covered in each tuning state. When the parameters in Table 1 are used for tuning, efficiency of the sixth antenna 206 in different tuning states is shown in FIG. 18. FIG. 18 shows antenna simulation efficiency of the sixth antenna 206 in different tuning states. It can be learned from FIG. 18 that average efficiency of the sixth antenna 206 in each of B28a, B28b, B20, B5, and B8 is higher than -5.5 dB. Average efficiency of an existing low-band antenna is -7 dB. Therefore, in this embodiment of this application, the average efficiency of the sixth antenna 206 in different tuning states is higher than the average efficiency of the existing low-band antenna by 1.5 dB.

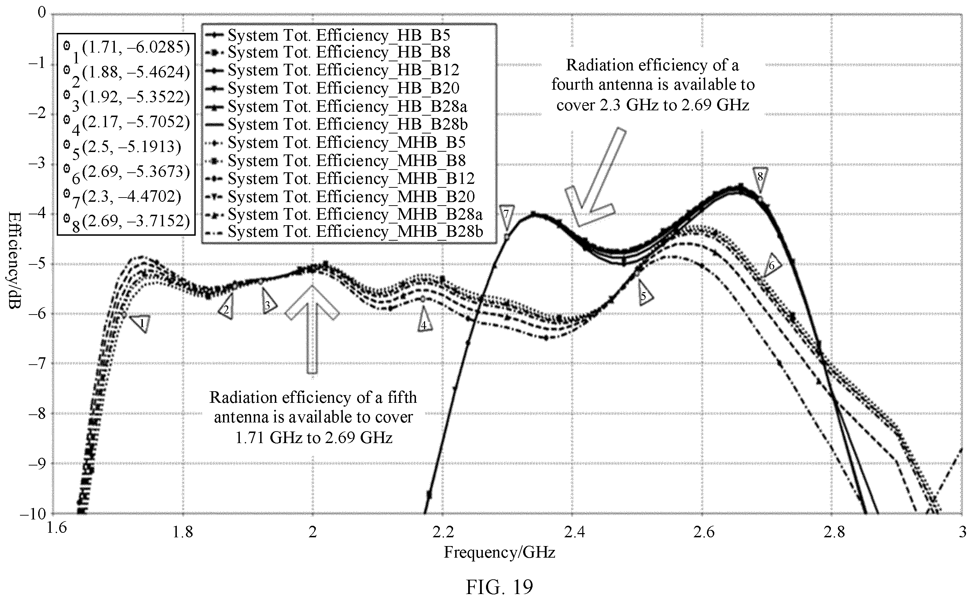

For example, the fourth antenna 204 is disposed as a high-band antenna, and the fifth antenna 205 is disposed as a medium- and high-band antenna. FIG. 19 shows radiation efficiency of the fourth antenna 204 and the fifth antenna 205 in different tuning states of the sixth antenna 206. It can be learned from FIG. 19 that in different tuning states of the sixth antenna 206, the radiation efficiency of the fourth antenna 204 may be available to cover 2300 MHz to 2690 MHz. Average efficiency of the fourth antenna 204 is -4.5 dB in the band of 2300 MHz to 2690 MHz.

It can be further learned from FIG. 19 that, in each tuning state of the sixth antenna 206, performance of the fourth antenna 204 is relatively stable. A reason is that the sixth ground point c6 of the sixth antenna 206 is close to the fourth antenna 204. In this way, the sixth antenna 206 does not affect the performance of the fourth antenna 204 during tuning. This ensures that the performance of the fourth antenna 204 is relatively stable in different tuning states of the sixth antenna 206.

In FIG. 19, in different tuning states of the sixth antenna 206, the radiation efficiency of the fifth antenna 205 may be available to cover 1710 MHz to 2690 MHz. When the sixth antenna 206 is in the B28 (703 MHz to 803 MHz) tuning state, efficiency of the fifth antenna 205 decreases near B12 (2600 MHz). A reason is that the ground point of the sixth antenna 206 is far away from the fifth antenna 205, and stability of the fifth antenna 205 is affected during tuning of the sixth antenna 206. However, the fifth antenna 205 is in the band of 1710 MHz to 2690 MHz, and average efficiency of the fifth antenna 205 at B3 (1800 MHz), B1 (2100 MHz), and B7 (2600 MHz) is still higher than -5.5 dB after switch and component losses are considered. Therefore, in this embodiment of this application, when the fourth antenna 204 is a high-band antenna, and the fifth antenna 205 is a medium- and high-band antenna, the fourth antenna 204 and the fifth antenna 205 still have good bandwidths and radiation efficiency with respect to a relatively small clearance and blocking by the curly part of the display layer 11.

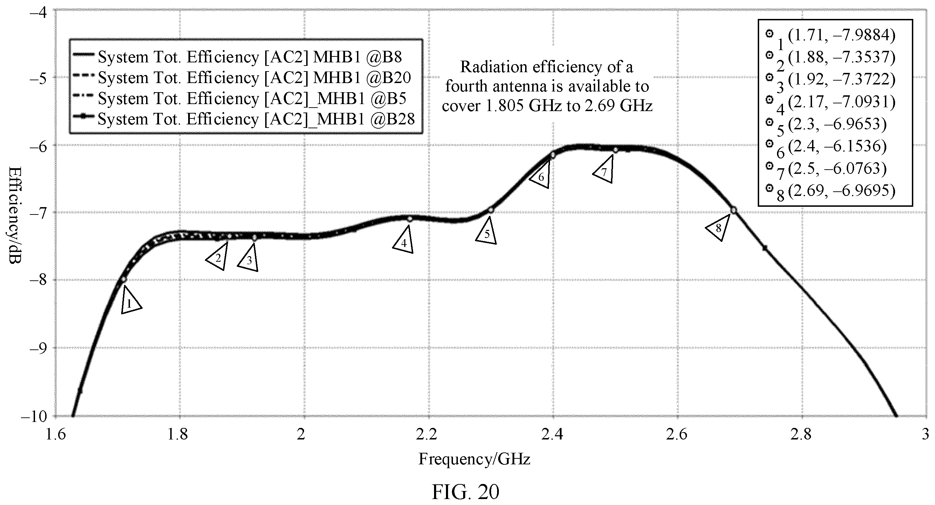

For example, the fourth antenna 204 is disposed as a medium- and high-band antenna. For example, the fourth antenna 204 is disposed as a medium- and high-band MIMO antenna. FIG. 20 shows radiation efficiency of the fourth antenna 204 disposed as a medium- and high-band MIMO antenna. It can be learned from FIG. 20 that the radiation efficiency of the fourth antenna 204 may be available to cover a band of 1805 MHz to 2690 MHz. When the fourth antenna 204 is disposed as a medium- and high-band MIMO antenna, a bandwidth of the fourth antenna 204 is extended. Therefore, average radiation efficiency of the fourth antenna 204 is lower than average radiation efficiency of the medium- and high-band antenna in FIG. 19. It can be learned from FIG. 20 that, in different tuning states of the sixth antenna 206, average efficiency of the fourth antenna 204 in a receive (Rx) band of B3 (1800 MHz) is higher than -7.5 dB, average efficiency of the fourth antenna 204 in an Rx band of B1 (2100 MHz) is -7.3 dB, and average efficiency of the fourth antenna 204 in an Rx band of B7 (2600 MHz) is -6.5 dB. Therefore, when the fourth antenna 204 is disposed as a medium- and high-band MIMO antenna, radiation efficiency of the medium- and high-band MIMO antenna decreases by approximately 2 dB compared with radiation efficiency of the fourth antenna 204 disposed as the high-band antenna in FIG. 19 and radiation efficiency of the medium- and high-band antenna in FIG. 19. However, for the MIMO antenna, the decrease of 2 dB in the radiation efficiency does not affect normal operation of the antenna. Therefore, in this embodiment of this application, radiation efficiency of the fifth antenna 205 disposed as a medium- and high-band antenna is higher than radiation efficiency of the fourth antenna 204 disposed as a medium- and high-band antenna. Therefore, the fifth antenna 205 may be a main antenna and cover medium and high bands of the main antenna, and the fourth antenna 204 may be a medium- and high-band MIMO antenna because radiation efficiency of the MIMO antenna may be 3 dB lower than radiation efficiency of the main antenna.

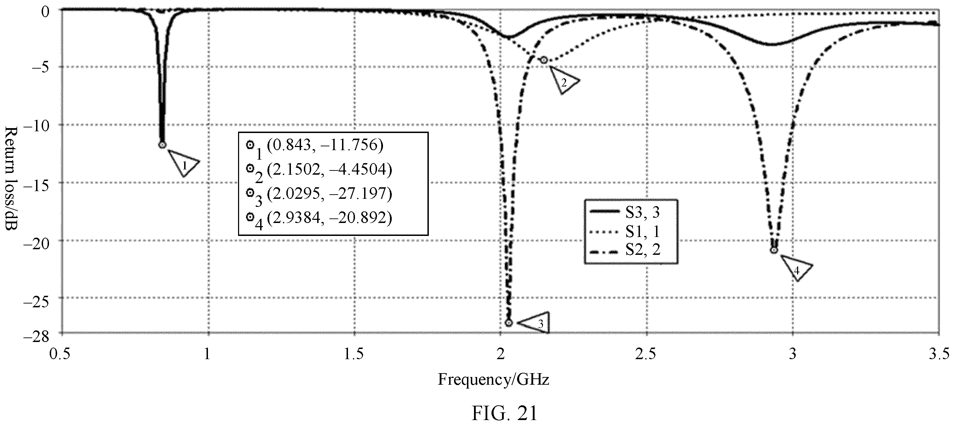

FIG. 21 shows initial resonances of the fourth antenna 204 and the fifth antenna 205 disposed as medium- and high-band antennas and the sixth antenna 206 disposed as a low-band antenna. As shown in FIG. 21, S3,3 is a return loss curve of the sixth antenna 206, S1,1 is a return loss curve of the fourth antenna 204, and S2,2 is a return loss curve of the fifth antenna 205. It can be learned from FIG. 21 that when the sixth antenna 206 is a low-band antenna, a resonance is at 0.84 GHz, and when the fourth antenna 204 is a medium- and high-band antenna, a resonance is at 2.15 GHz. When the fifth antenna 205 is a medium- and high-band antenna, there are two resonances, which are respectively at 2.03 GHz and 2.93 GHz.

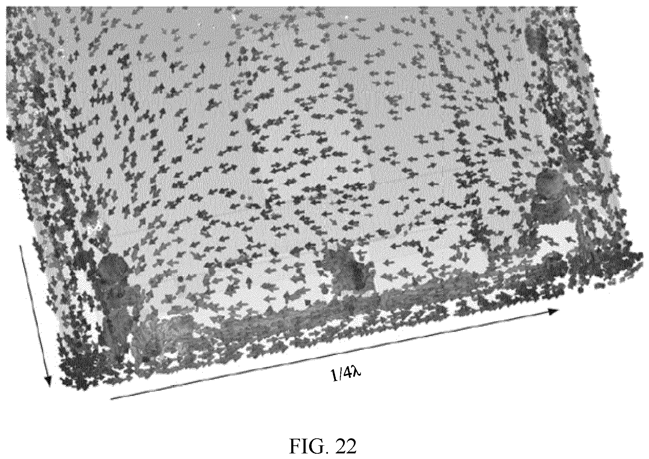

Generally, the low-band antenna needs a length of approximately 70 mm to generate a 0.84 GHz low-frequency resonance. However, in this embodiment of this application, the length of the sixth radiator 233 of the sixth antenna 206 is 53 mm, but a 0.84 GHz resonance is excited. Therefore, it can be learned that in addition to the sixth radiator 233, another radiator is further used for the sixth antenna 206. FIG. 22 shows current distribution during low-frequency resonance (0.84 GHz) of the sixth antenna 206. It can be learned from FIG. 22 that the fifth radiator 232, the fifth extension stub 23b, and the sixth radiator 233 form an in-phase current (1/4 wavelength). Therefore, the 1.5 mm gap c between the fifth radiator 232 and the sixth radiator 233 does not block distribution of the in-phase current. In this way, during radiation of the sixth antenna 206, the sixth antenna 206 uses a radiating element of the fifth antenna 205. The sixth radiator 233, the fifth radiator 232, and the fifth extension stub 23b are used together, so that the sixth antenna 206 excites a 0.84 GHz resonance in a length of 53 mm. Therefore, in this embodiment of this application, a length of the low-band antenna is shortened compared with that in the conventional technology.

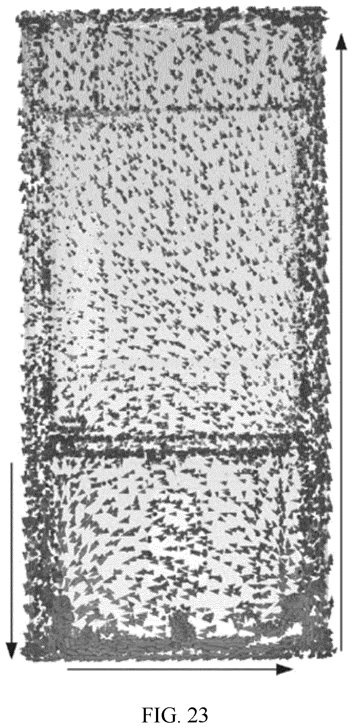

FIG. 23 shows current distribution on the middle frame 20, a left curly part of the display layer 11 of the display 10, and a frame (for example, the top frame 21, the bottom frame 23, and each extension stub) during low-frequency resonance (0.84 GHz) of the sixth antenna 206. It can be learned from FIG. 23 that current distribution on a curly side of the display layer 11 and the frame is in-phase, to form ring-shaped current distribution. For a low-band antenna, main radiation is floor radiation (that is, radiation by a metal plate through which the low-band antenna is grounded). Therefore, this type of current distribution facilitates radiation of the low-band antenna.

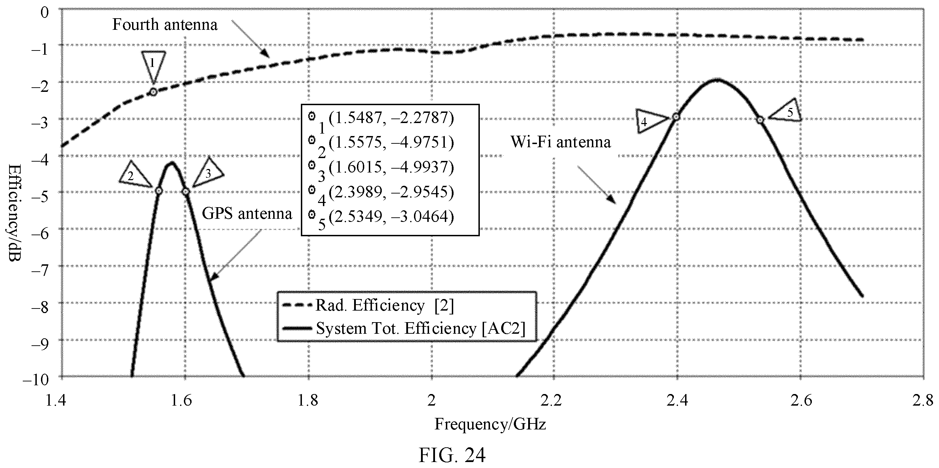

FIG. 24 shows initial radiation efficiency of the fourth antenna 204 disposed as a medium- and high-band antenna and efficiency of the fourth antenna 204 disposed as a Wi-Fi antenna and a GPS antenna. As shown in FIG. 24, although a resonance of the fourth antenna 204 is at 2.15 GHz, initial radiation efficiency of the fourth antenna 204 reaches -2.3 dB at 1.54 GHz. Therefore, the fourth antenna 204 has a good bandwidth characteristic. In a band of 1.5 GHz to 2.7 GHz, efficiency is higher than -2.5 dB. Therefore, different matching circuits are used, and the fourth antenna 204 may be disposed as a medium- and high-band antenna, or may be disposed as a GPS antenna and a Wi-Fi antenna. The fourth antenna 204 is not a common inverted F antenna (Invert F Antenna, IFA). Because of an antenna length of 23 mm, in a GPS band (1557 MHz to 1601 MHz), there is no initial radiation efficiency higher than -2.0 dB.

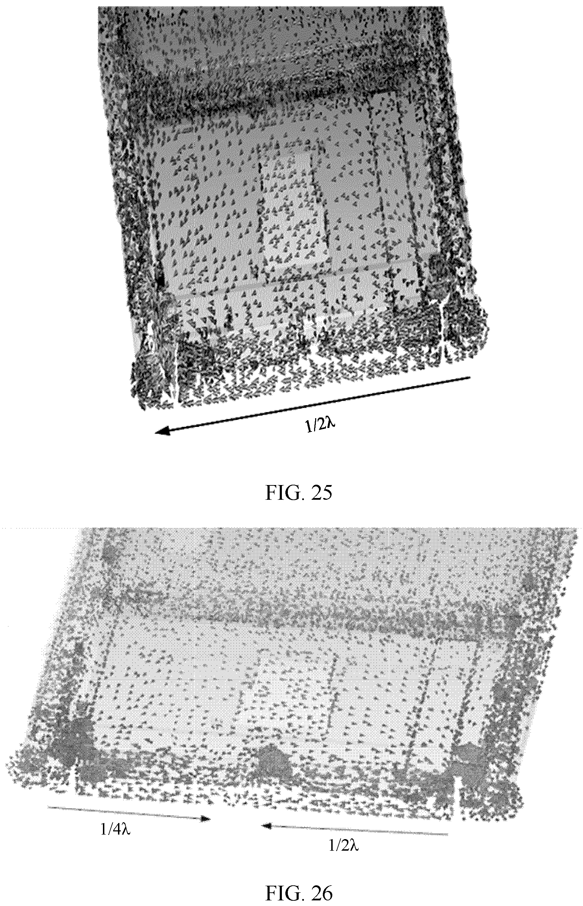

FIG. 25 shows current distribution during resonance of the fourth antenna 204. As shown in FIG. 25, the fourth antenna 204 forms half-wavelength current distribution on the bottom frame 23 of the mobile phone 100. This indicates that radiation of the fourth antenna 204 is from the sixth radiator 233 and a radiating element of the fourth antenna 204. Main radiation is from the sixth radiator 233. Therefore, in this embodiment of this application, the fourth antenna 204 uses a radiating element of the sixth antenna 206. Thus, even if the fourth extension stub 23a in the fourth antenna 204 is blocked by the curly part of the display layer 11, radiation efficiency of the fourth antenna 204 is relatively high. The fourth extension stub 23a and the fourth radiator 231 are not main radiating elements of the fourth antenna 204, currents on the fourth extension stub 23a and the fourth radiator 231 cross the gap d, and the radiating element of the sixth antenna 206 is used for radiation. Therefore, in this embodiment of this application, it is ensured that the fourth antenna 204 has a good bandwidth and good radiation efficiency.

FIG. 26 shows current distribution during resonance of the fifth antenna 205. As shown in FIG. 25, the fifth antenna 205 forms a 3/4λ current mode on the sixth radiator 233. This indicates that the fifth antenna 205 uses the sixth radiator 233. The fifth extension stub 23b connected to the fifth feed point a5 and the fifth radiator 232 that are in the fifth antenna 205 are not main radiating elements of the fifth antenna 205, a main radiating element of the fifth antenna 205 is the sixth radiator 233, the fifth antenna 205 reuses a stub of the sixth antenna 206 for radiation.

Therefore, in this embodiment of this application, the fourth antenna 204 and the fifth antenna 205 use the radiation stub of the sixth antenna 206. This overcomes a problem that antenna efficiency is reduced because the curly part blocks the antenna when the display 10 curls. The sixth antenna 206 uses the radiation stub of the fifth antenna 205, so that the length of the sixth antenna 206 is reduced.

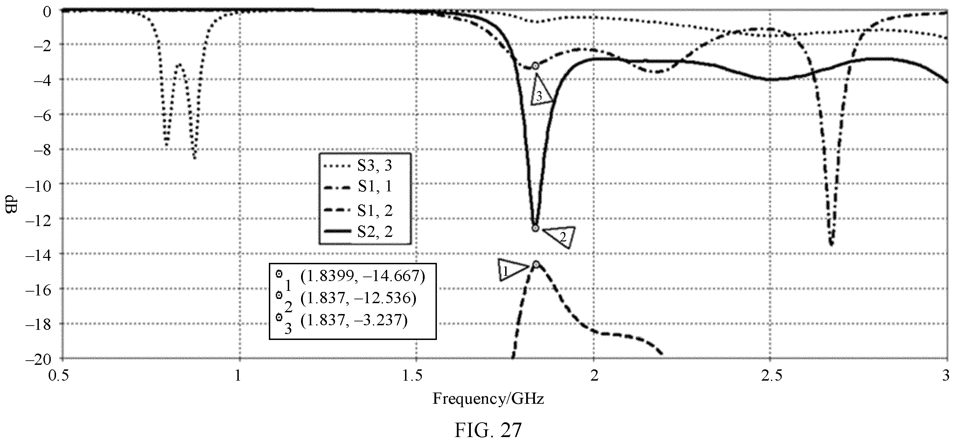

FIG. 27 shows efficiency and isolation curves existing when the fourth antenna 204 and the fifth antenna 205 are disposed as two medium- and high-band antennas and the sixth antenna 206 is disposed as a low-band antenna. In FIG. 27, S3,3 is a return loss curve obtained after a matching circuit is added to the sixth antenna 206, S2,2 is a return loss curve obtained after a matching circuit is added to the fifth antenna 205, S1,1 is a return loss curve obtained after a matching circuit is added to the fourth antenna 204, and S1,2 is an isolation curve of the fifth antenna 205 and the fourth antenna 204. As shown in FIG. 27, when both the fourth antenna 204 and the fifth antenna 205 are medium- and high-band antennas, worst isolation between the fourth antenna 204 and the fifth antenna 205 is at 1.837 GHz, and an isolation degree is -14.6 dB. In another band, an isolation degree between the fourth antenna 204 and the fifth antenna 205 is less than -14.6 dB. However, in the conventional technology, when a decoupling structure is not used for two medium- and high-band antennas, an isolation degree is only -6 dB. Therefore, in this embodiment of this application, when the fourth antenna 204 and the fifth antenna 205 are intra-frequency medium- and high-band antennas, there is good isolation between the two antennas.

### Scenario 2

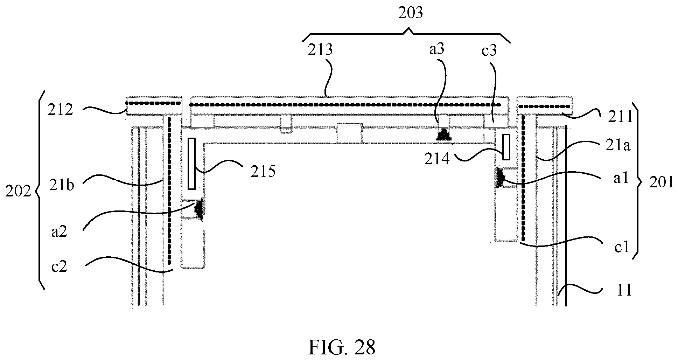

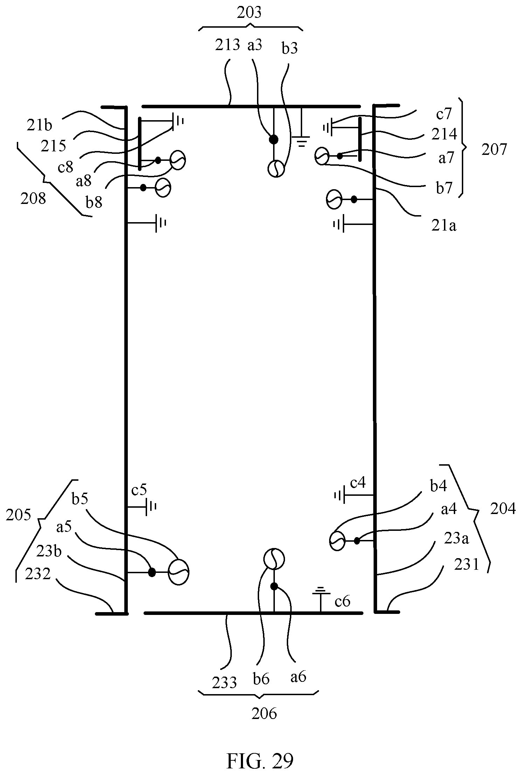

In a possible implementation, in this embodiment of this application, the mobile phone 100 may further include at least one high-band antenna. For example, as shown in FIG. 28 and FIG. 29, there are two high-band antennas: a seventh antenna 207 and an eighth antenna 208. For example, the mobile phone 100 may further include the seventh antenna 207 and the eighth antenna 208. The seventh antenna 207 may include a seventh radiator 214, a seventh feed point a7, a seventh feed b7, and a seventh ground point c7. The seventh radiator 214 is electrically connected to the seventh feed point a7 and the seventh ground point c7, and the seventh feed b7 feeds a high-frequency current into the seventh radiator 214 through the seventh feed point a7. As shown in FIG. 28, the seventh radiator 214 may be disposed along an inner side of the first extension stub 21a (that is, a surface that is of the first extension stub 21a and that faces the second extension stub 21b). A minimum distance between the seventh radiator 214 and the first extension stub 21a is greater than or equal to 0.5 mm. This ensures that a clearance of the seventh radiator 214 is greater than or equal to 0.5 mm.

For example, the eighth antenna 208 may include an eighth radiator 215, an eighth feed point a8, an eighth feed b8, and an eighth ground point c8. The eighth radiator 215 is electrically connected to the eighth feed point a8 and the eighth ground point c8, and the eighth feed b8 feeds a high-frequency current into the eighth radiator 215 through the eighth feed point a8. As shown in FIG. 28, the eighth radiator 215 may be disposed along an inner side of the second extension stub 21b (that is, a surface that is of the second extension stub 21b and that faces the first extension stub 21a). A minimum distance between the eighth radiator 215 and the second extension stub 21b is greater than or equal to 0.5 mm. This ensures that a clearance of the eighth radiator 215 is greater than or equal to 0.5 mm.

In this embodiment of this application, the seventh antenna 207 and the eighth antenna 208 have corresponding feed points. In this way, the antennas at the top of the mobile phone 100 have at least five independent feeding ports, so that antenna modes are richer, and antenna setting is more flexible.

In this embodiment of this application, the seventh antenna 207 and the eighth antenna 208 may be Wi-Fi 5G antennas. An operating band of the Wi-Fi 5G antenna may be 4900 MHz to 5900 MHz. Alternatively, the seventh antenna 207 and the eighth antenna 208 may be antennas covering 5G bands. For example, operating bands of the seventh antenna 207 and the eighth antenna 208 may be 3300 MHz to 3600 MHz and 4800 MHz to 5000 MHz. It should be noted that the operating bands of the seventh antenna 207 and the eighth antenna 208 include but are not limited to a band above or below 6 GHz in a 5G band.

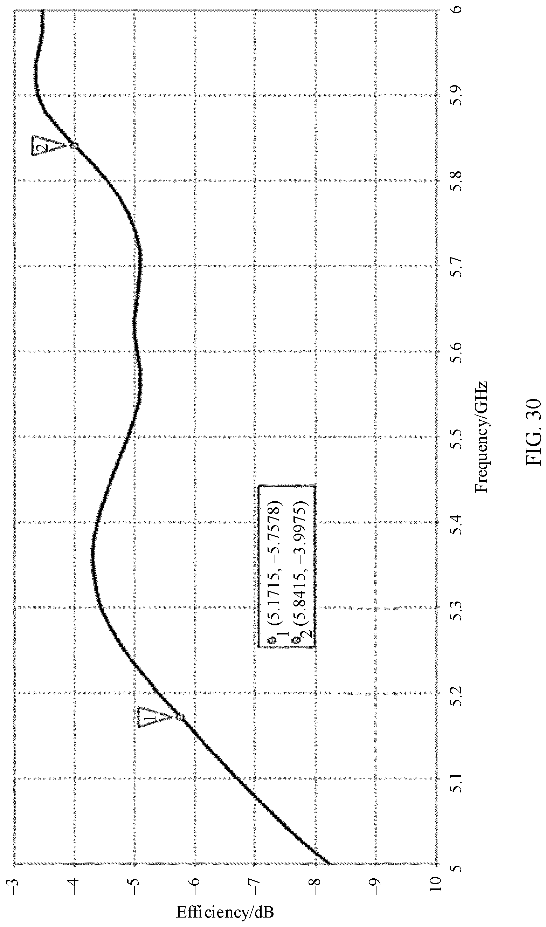

FIG. 30 shows radiation efficiency existing when the seventh antenna 207 is a Wi-Fi 5G antenna. As shown in FIG. 30, average efficiency in an entire band is higher than -5 dB. Therefore, when the seventh antenna 207 is located inside the mobile phone 100, the seventh antenna 207 has good radiation efficiency.

In this embodiment of this application, the operating bands of the seventh antenna 207 and the eighth antenna 208 are relatively high. Therefore, the two antennas do not disturb the three existing antennas. In this way, the seventh antenna 207 and the eighth antenna 208 are antennas suitable for a 5G system (3.3 GHz to 5 GHz).

It should be noted that, in this embodiment, positions at which the seventh antenna 207 and the eighth antenna 208 are disposed include but are not limited to the inner sides of the first extension stub 21a and the second extension stub 21b. For example, the seventh antenna 207 and the eighth antenna 208 may alternatively be disposed along the fourth extension stub 23a and the fifth extension stub 23b. Alternatively, the seventh antenna 207, the eighth antenna 208, a ninth antenna (not shown), and a tenth antenna (not shown) may be disposed respectively along inner sides of the first extension stub 21a, the second extension stub 21b, the fourth extension stub 23a, and the fifth extension stub 23b. The ninth antenna and the tenth antenna each have a corresponding feed point. In this way, the antennas at the top of the mobile phone 100 have five independent feeding ports, the antennas at the bottom of the mobile phone 100 have five independent feeding ports, and 10 antennas may be disposed in the mobile phone 100. It should be noted that, in this embodiment, a quantity of feeding ports of the antennas in the mobile phone 100 includes but is not limited to 10.

In this embodiment of this application, the seventh feed point a7 of the seventh antenna 207 and the eighth feed point a8 of the eighth antenna 208 may be located on the circuit board 30, and the seventh ground point c7 and the eighth ground point c8 may be connected to the ground point of the circuit board 30, or connected to the metal middle plate 22 to implement grounding. The seventh antenna 207 and the eighth antenna 208 may be suspended inside the mobile phone 100, or the seventh antenna 207 and the eighth antenna 208 may be located on the circuit board 30, or the seventh antenna 207 and the eighth antenna 208 may be suspended on the metal middle plate 22.

In descriptions of embodiments of this application, it should be noted that, unless otherwise clearly specified and limited, terms "mount", "connected", and "connection" should be understood in a broad sense. For example, the terms may be used for a fixed connection, an indirect connection through an intermediate medium, an internal connection between two elements, or an interaction relationship between two elements. For a person of ordinary skill in the art, specific meanings of the foregoing terms in embodiments of this application may be understood based on a specific situation.

In embodiments of this application or by implication, the referred apparatus or component needs to have a specific azimuth, be constructed and operated in a specific azimuth, and therefore cannot be understood as a limitation to embodiments of this application. In the descriptions of embodiments of this application, the meaning of "a plurality of" is two or more, unless otherwise precisely and specifically specified.

In the specification, claims, and accompanying drawings of embodiments of this application, the terms "first", "second", "third", "fourth", and the like (if existent) are intended to distinguish between similar objects but do not necessarily indicate a specific order or sequence. It should be understood that the data used in such a way is interchangeable in proper circumstances so that embodiments of this application described herein can be implemented in an order other than the order illustrated or described herein. In addition, the terms "include", "have", and any variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application as only limited by the appended claims.

## Claims

1. An electronic device with a rollable display, comprising at least the rollable display (10), a rear cover (40), a middle frame (10) located between the rollable display and the rear cover, and an antenna assembly, ;
wherein the middle frame comprises a metal middle plate (22) and a top metal frame (21) and a bottom metal frame (23) that are located at two ends of the metal middle plate, the metal middle plate is located in space enclosed by the rollable display and the rear cover, and the top metal frame and the bottom metal frame are respectively located at the top and the bottom of the rollable display and the rear cover;
wherein the rollable display has curly parts (111, 121) curling toward the rear cover, and a first extension stub (21a) and a second extension stub (21b), in the antenna assembly extend into the space enclosed by the rollable display and the rear cover;
wherein the antenna assembly comprises a first antenna (201), and the first antenna comprises a first radiator (211), the first extension stub, and a first feed point (a1) and a first ground point (c1) that are electrically connected to the first extension stub; and
one end of the first extension stub is connected to the first radiator, the other end of the first extension stub extends into the electronic device, and the first radiator is a part of the top metal frame or a part of the bottom metal frame of the electronic device.

2. The electronic device according to claim 1, wherein the antenna assembly further comprises a second antenna, wherein the second antenna comprises at least a second radiator, the second extension stub, and a second feed point and a second ground point that are electrically connected to the second extension stub, one end of the second extension stub is connected to the second radiator, and the other end of the second extension stub extends into the electronic device; and
the first radiator is located at one end of the top metal frame, and the second radiator is located at the other end of the top metal frame; or
the first radiator is located at one end of the bottom metal frame, and the second radiator is located at the other end of the bottom metal frame.

3. The electronic device according to claim 2, wherein the first extension stub, the second extension stub each are in a suspended bridge structure in the electronic device.

4. The antenna assembly according to claim 2 or claim 3, wherein lengths of the first extension stub, and the second extension stub are in a range of 10 mm to 25 mm.

5. The electronic device according to any one of claims 2 to 4, wherein lengths of the first radiator, and the second radiator are in a range of 8 mm to 10 mm.

6. The electronic device according to any one of claims 2 to 5, wherein the antenna assembly further comprises a third antenna, wherein the third antenna comprises at least a third radiator, and a third feed point and a third ground point that are electrically connected to the third radiator; and
the third radiator is located between the first radiator and the second radiator, a first gap exists between one end of the third radiator and the first radiator, a second gap exists between the other end of the third radiator and the second radiator.

7. The electronic device according to claim 6, wherein the first radiator, the second radiator, and the third radiator are metal frames formed by disposing two gaps on the top metal frame.

8. The electronic device according to claim 7, wherein a gap width of the first gap and the second gap are in a range of 1 mm to 1.5 mm.

9. The electronic device according to any one of claims 6 to 8, wherein length of the third radiator is in a range of 50 mm to 60 mm.

10. The electronic device according to any one of claims 6 to 9, wherein clearances of the first radiator, the second radiator, and the third radiator are in a range of 1 mm to 1.4 mm; and
clearances of the first extension stub, the second extension stub are not less than 0.5 mm.

11. The electronic device according to any one of claims 6 to 10, wherein the third antenna is a low-band antenna, the first antenna and the second antenna are medium- and high-band antennas, the first antenna and the second antenna use the radiator of the third antenna, and the third antenna uses the radiation stub of the first antenna or the second antenna.

12. The electronic device according to any one of claims 1 to 11, wherein two side edges of the metal middle plate respectively extend toward the top metal frame or the bottom metal frame to form the first extension stub, and the second extension stub.

## Patentansprüche

1. Elektronische Vorrichtung mit einer rollbaren Anzeige, umfassend mindestens die rollbare Anzeige (10), eine hintere Abdeckung (40), einen mittleren Rahmen (10), der sich zwischen der rollbaren Anzeige und der hinteren Abdeckung befindet, und eine Antennenanordnung;
wobei der mittlere Rahmen eine mittlere Metallplatte (22) und einen oberen Metallrahmen (21) und einen unteren Metallrahmen (23) umfasst, die sich an zwei Enden der mittleren Metallplatte befinden, wobei sich die mittlere Metallplatte in einem Raum, der von der rollbaren Anzeige und der hinteren Abdeckung umschlossen ist, befindet und sich der obere Metallrahmen und der untere Metallrahmen jeweils oben und unten an der rollbaren Anzeige und an der hinteren Abdeckung befinden;
wobei die rollbare Anzeige gekrümmte Teile (111, 121), die sich zu der hinteren Abdeckung hin krümmen, aufweist und sich ein erster Verlängerungsstutzen (21a) und ein zweiter Verlängerungsstutzen (21b) in der Antennenanordnung in den Raum, der von der rollbaren Anzeige und der hinteren Abdeckung umschlossen ist, erstrecken;
wobei die Antennenanordnung eine erste Antenne (201) umfasst und die erste Antenne einen ersten Strahler (211), den ersten Verlängerungsstutzen und einen ersten Speisepunkt (a1) und einen ersten Erdungspunkt (c1), die elektrisch mit dem ersten Verlängerungsstutzen verbunden sind, umfasst; und
ein Ende des ersten Verlängerungsstutzens mit dem ersten Strahler verbunden ist, sich das andere Ende des ersten Verlängerungsstutzens in die elektronische Vorrichtung erstreckt und der erste Strahler ein Teil des oberen Metallrahmens oder ein Teil des unteren Metallrahmens der elektronischen Vorrichtung ist.

2. Elektronische Vorrichtung nach Anspruch 1, wobei die Antennenanordnung ferner eine zweite Antenne umfasst, wobei die zweite Antenne mindestens einen zweiten Strahler, den zweiten Verlängerungsstutzen und einen zweiten Speisepunkt und einen zweiten Erdungspunkt, die elektrisch mit dem zweiten Verlängerungsstutzen verbunden sind, umfasst, wobei ein Ende des zweiten Verlängerungsstutzens mit dem zweiten Strahler verbunden ist und sich das andere Ende des zweiten Verlängerungsstutzens in die elektronische Vorrichtung erstreckt; und
sich der erste Strahler an einem Ende des oberen Metallrahmens befindet und sich der zweite Strahler an dem anderen Ende des oberen Metallrahmens befindet; oder
sich der erste Strahler an einem Ende des unteren Metallrahmens befindet und sich der zweite Strahler an dem anderen Ende des unteren Metallrahmens befindet.

3. Elektronische Vorrichtung nach Anspruch 2, wobei sich der erste Verlängerungsstutzen und der zweite Verlängerungsstutzen jeweils in einer Hängebrückenstruktur in der elektronischen Vorrichtung befinden.

4. Antennenanordnung nach Anspruch 2 oder Anspruch **3,** wobei Längen des ersten Verlängerungsstutzens und des zweiten Verlängerungsstutzens in einem Bereich von 10 mm bis 25 mm liegen.

5. Elektronische Vorrichtung nach einem der Ansprüche 2 bis **4,** wobei Längen des ersten Strahlers und des zweiten Strahlers in einem Bereich von 8 mm bis 10 mm liegen.

6. Elektronische Vorrichtung nach einem der Ansprüche 2 bis **5,** wobei die Antennenanordnung ferner eine dritte Antenne umfasst, wobei die dritte Antenne mindestens einen dritten Strahler und einen dritten Speisepunkt und einen dritten Erdungspunkt, die elektrisch mit dem dritten Strahler verbunden sind, umfasst; und sich der dritte Strahler zwischen dem ersten Strahler und dem zweiten Strahler befindet, ein erster Spalt zwischen einem Ende des dritten Strahlers und dem ersten Strahler vorhanden ist und ein zweiter Spalt zwischen dem anderen Ende des dritten Strahlers und dem zweiten Strahler vorhanden ist.

7. Elektronische Vorrichtung nach Anspruch 6, wobei der erste Strahler, der zweite Strahler und der dritte Strahler Metallrahmen sind, die durch Anordnen von zwei Spalten auf dem oberen Metallrahmen gebildet werden.

8. Elektronische Vorrichtung nach Anspruch 7, wobei eine Spaltbreite des ersten Spalts und des zweiten Spalts in einem Bereich von 1 mm bis 1,5 mm liegt.

9. Elektronische Vorrichtung nach einem der Ansprüche 6 bis 8, wobei eine Länge des dritten Strahlers im Bereich von 50 mm bis 60 mm liegt.

10. Elektronische Vorrichtung nach einem der Ansprüche 6 bis 9, wobei Abstände des ersten Strahlers, des zweiten Strahlers und des dritten Strahlers in einem Bereich von 1 mm bis 1,4 mm liegen; und
Abstände zwischen dem ersten Verlängerungsstutzen und dem zweiten Verlängerungsstutzen nicht weniger als 0,5 mm betragen.

11. Elektronische Vorrichtung nach einem der Ansprüche 6 bis 10, wobei die dritte Antenne eine Niederbandantenne ist, die erste Antenne und die zweite Antenne Mittel- und Hochbandantennen sind, die erste Antenne und die zweite Antenne den Strahler der dritten Antenne verwenden und die dritte Antenne den Strahlungsstutzen der ersten Antenne oder der zweiten Antenne verwendet.

12. Elektronische Vorrichtung nach einem der Ansprüche 1 bis 11, wobei sich zwei Seitenkanten der mittleren Metallplatte jeweils in Richtung des oberen Metallrahmens oder des unteren Metallrahmens erstrecken, um den ersten und den zweiten Verlängerungsstutzen zu bilden.

## Revendications

1. Dispositif électronique comportant un écran de prise, comprenant au moins l'écran de prise (10), un couvercle arrière (40), un cadre intermédiaire (10) situé entre l'écran de prise et le couvercle arrière, et un ensemble antenne, ; dans lequel le cadre intermédiaire comprend une plaque intermédiaire métallique (22) et un cadre métallique supérieur (21) et un cadre métallique inférieur (23) qui sont situés aux deux extrémités de la plaque intermédiaire métallique, la plaque intermédiaire métallique est située dans l'espace délimité par l'écran de prise et le couvercle arrière, et le cadre métallique supérieur et le cadre métallique inférieur sont respectivement situés en haut et en bas de l'écran de prise et du couvercle arrière ;
dans lequel l'écran de prise comporte des parties bouclées (111, 121) s'enroulant vers le couvercle arrière, et un premier tronçon d'extension (21a) et un second tronçon d'extension (21b), dans l'ensemble antenne, se prolonge dans l'espace délimité par l'écran de prise et le couvercle arrière ;
dans lequel l'ensemble antenne comprend une première antenne (201), et la première antenne comprend un premier radiateur (211), le premier tronçon d'extension, et un premier point d'alimentation (a1) et un premier point de masse (c1) qui sont électriquement connectés au premier tronçon d'extension ; et une extrémité du premier tronçon d'extension est connectée au premier radiateur, l'autre extrémité du premier tronçon d'extension se prolonge dans le dispositif électronique, et le premier radiateur est une partie du cadre métallique supérieur ou une partie du cadre métallique inférieur du dispositif électronique.

2. Dispositif électronique selon la revendication 1, dans lequel l'ensemble antenne comprend également une deuxième antenne, dans lequel la deuxième antenne comprend au moins un deuxième radiateur, le second tronçon d'extension, et un deuxième point d'alimentation et un deuxième point de masse qui sont électriquement connectés au second tronçon d'extension, une extrémité du second tronçon d'extension est connectée au deuxième radiateur, et l'autre extrémité du second tronçon d'extension se prolonge dans le dispositif électronique ; et
le premier radiateur est situé à une extrémité du cadre métallique supérieur, et le deuxième radiateur est situé à l'autre extrémité du cadre métallique supérieur ; ou
le premier radiateur est situé à une extrémité du cadre métallique inférieur, et le deuxième radiateur est situé à l'autre extrémité du cadre métallique inférieur.

3. Dispositif électronique selon la revendication 2, dans lequel le premier tronçon d'extension, le second tronçon d'extension se trouvent chacun dans une structure de pont suspendu dans le dispositif électronique.

4. Ensemble antenne selon la revendication 2 ou la revendication 3, dans lequel des longueurs du premier tronçon d'extension et du second tronçon d'extension sont comprises dans une plage de 10 mm à 25 mm.

5. Dispositif électronique selon l'une quelconque des revendications 2 à 4, dans lequel des longueurs du premier radiateur et du deuxième radiateur sont comprises dans une plage de 8 mm à 10 mm.

6. Dispositif électronique selon l'une quelconque des revendications 2 à 5, dans lequel l'ensemble antenne comprend également une troisième antenne, dans lequel la troisième antenne comprend au moins un troisième radiateur, et un troisième point d'alimentation et un troisième point de masse qui sont électriquement connectés au troisième radiateur ; et le troisième radiateur est situé entre le premier radiateur et le deuxième radiateur, un premier espace existe entre une extrémité du troisième radiateur et le premier radiateur, un second espace existe entre l'autre extrémité du troisième radiateur et le deuxième radiateur.

7. Dispositif électronique selon la revendication 6, dans lequel le premier radiateur, le deuxième radiateur et le troisième radiateur sont des cadres métalliques formés en disposant deux espaces sur le cadre métallique supérieur.

8. Dispositif électronique selon la revendication 7, dans lequel une largeur d'espace du premier espace et du second espace est comprise dans une plage de 1 mm à 1,5 mm.

9. Dispositif électronique selon l'une quelconque des revendications 6 à 8, dans lequel la longueur du troisième radiateur est comprise dans une plage de 50 mm à 60 mm.

10. Dispositif électronique selon l'une quelconque des revendications 6 à 9, dans lequel des jeux du premier radiateur, du deuxième radiateur et du troisième radiateur sont compris dans une plage de 1 mm à 1,4 mm ; et
des jeux du premier tronçon d'extension et du second tronçon d'extension ne sont pas inférieurs à 0,5 mm.

11. Dispositif électronique selon l'une quelconque des revendications 6 à 10, dans lequel la troisième antenne est une antenne à bande basse, la première antenne et la deuxième antenne sont des antennes à bande moyenne et haute, la première antenne et la deuxième antenne utilisent le radiateur de la troisième antenne, et la troisième antenne utilise le tronçon de rayonnement de la première antenne ou de la deuxième antenne.

12. Dispositif électronique selon l'une quelconque des revendications 1 à 11, dans lequel deux bords latéraux de la plaque intermédiaire métallique se prolongent respectivement vers le cadre métallique supérieur ou le cadre métallique inférieur pour former le premier tronçon d'extension et le second tronçon d'extension.
